(19)

Europäisches
Patentamt

European
Patent Office

Office européen
des brevets

(11) **EP 4 446 976 A1**

(12) **EUROPEAN PATENT APPLICATION**
published in accordance with Art. 153(4) EPC

(43) Date of publication:
**16.10.2024 Bulletin 2024/42**

(21) Application number: **22914617.0**

(22) Date of filing: **26.12.2022**

(51) International Patent Classification (IPC):
*G06T 7/00* (2017.01)

(52) Cooperative Patent Classification (CPC):
**G06F 3/01; G06T 7/00; G06T 7/50; G06T 7/70;
G06T 19/00; G06V 20/00; G08B 7/06; G08B 13/12**

(86) International application number:
**PCT/CN2022/141783**

(87) International publication number:
**WO 2023/125363 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111679498**

(71) Applicant: **Huawei Technologies Co., Ltd.
Shenzhen, Guangdong 518129 (CN)**

(72) Inventors:
• **WU, Yafei
  Shenzhen, Guangdong 518129 (CN)**
• **SHAO, Gang
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **AUTOMATIC GENERATION METHOD AND APPARATUS FOR ELECTRONIC FENCE, AND
REAL-TIME DETECTION METHOD AND APPARATUS**

(57)     A method for automatically generating a geofence, a real-time detection method, and an apparatus. The method includes: (101) obtaining an environmental image, where the environmental image is obtained by photographing a scenario in which a user is located; (102) generating spatial structure information based on the environmental image, where the spatial structure information includes a 3D point cloud and information about at least one plane, and the plane is determined by distribution of points of the 3D point cloud on the plane; and (103) generating the geofence based on the spatial structure information.

FIG. 2

**Description**

This application claims priority to Chinese Patent Application No. 202111679498.5, filed with the China National Intellectual Property Administration on December 31, 2021 and entitled "METHOD FOR AUTOMATICALLY GENERATING GEOFENCE, REAL-TIME DETECTION METHOD, AND APPARATUS", which is incorporated herein by reference in its entirety.

**TECHNICAL FIELD**

Embodiments of this application relate to the communication field, and in particular, to a method for automatically generating a geofence, a real-time detection method, and an apparatus.

**BACKGROUND**

In recent years, a virtual reality (Virtual Reality, VR) technology has attracted more and more attention from industry and a consumer field, and a VR device is steadily demanded by the market. A virtual world is completely isolated from a real world during use of the VR device, and a user cannot sense an ambient environment during the use. Therefore, to protect user safety, a geofence is used as a boundary of a safety area. When the user exceeds the geofence, the user is prompted with a risk.

However, the geofence has a high requirement on an application scenario and is convenient for common use.

**SUMMARY**

This application provides a method for automatically generating a geofence, a real-time detection method, and an apparatus, to automatically generate the geofence. A usage threshold of the geofence is reduced, the automatically generated geofence has high accuracy and high safety, and user experience can be greatly improved. The real-time detection method and the apparatus can update the geofence in a timely manner, thereby further improving accuracy and safety of the geofence.

According to a first aspect, an embodiment of this application provides a method for automatically generating a geofence, including: obtaining an environmental image, where the environmental image is obtained by photographing a scenario in which a user is located; generating spatial structure information based on the environmental image, where the spatial structure information includes a 3D point cloud and information about at least one plane, and the plane is determined by distribution of points of the 3D point cloud on the plane; and generating the geofence based on the spatial structure information.

In embodiments of this application, when a user needs to use an electronic device, a camera or a camera lens of the electronic device may photograph a scenario in which a user is located to obtain an environmental image, generate, based on the environmental image, spatial structure information that can represent different object forms such as a 3D object and ground in the scenario, and then determine, based on the spatial structure information, boundaries within which the user can safely move, and obtain the geofence after the boundaries are connected.

The 3D point cloud in the spatial structure information may alternatively be output by a SLAM system, and may be used to describe a shape of a 3D object. The information about the plane is about a plane that is fitted based on an actual 3D point cloud that is obtained by simulating object distribution of the 3D point cloud in the spatial structure information, and may represent a real plane of the object. The information about the plane is information that can describe the plane, for example, a length and a width of the plane.

The electronic device may generate the geofence in different manners based on different spatial structure information. For example, a reference plane without a boundary corresponding to the ground is first formed, and then processing such as detection and identification is performed on an object in space in which the user is located based on the foregoing spatial structure information. A boundary of the reference plane and an obstacle area of the object in the space are obtained based on processed spatial structure information. The boundary of the reference plane and the obstacle area are connected on the reference plane without a boundary, to obtain a safety area in which the user can safely move, where the boundary of the safety area is the geofence.

In this embodiment of this application, the geofence can be automatically generated based on the environmental image. The environmental image may alternatively be obtained by starting a photographing mode or an image-shooting mode after power-on, and no user operation is required. The geofence generated in this embodiment of this application has high accuracy, high safety, and high adaptability to the scenario in which the user is located, and is not limited by a shape of the geofence. Therefore, a threshold of a usage scenario of the user is reduced, and user experience is greatly improved.

The plane in this application is a horizontal plane, a vertical plane, or an inclined plane, and the inclined plane is a plane that is not parallel to the horizontal plane or the vertical plane.

In a possible implementation, the at least one plane includes at least one horizontal plane and another plane, and the another plane includes a horizontal plane or a vertical plane.

In a possible implementation, the at least one plane includes at least one horizontal plane and at least one vertical plane.

In a possible implementation, before the generating spatial structure information based on the environmental image, the method further includes: obtaining measurement unit (inertial measurement unit, IMU) data, where the IMU data is obtained by performing IMU resolving on an object in the scenario in which the user is located. The generating spatial structure information based on the environmental image includes: generating the spatial structure information based on the environmental image and the IMU data.

The IMU data is obtained by resolving based on a measured acceleration signal of the object in the scenario in which the user is located on three independent axes of a coordinate system of a carrier, an angular velocity signal of the carrier relative to a navigation coordinate system, and a measured angular velocity and measured acceleration of the object in three-dimensional space.

The electronic device may generate the geofence in different manners based on different spatial structure information. For example, a reference plane without a boundary corresponding to the ground is first formed, and then processing such as detection and identification is performed on an object in space in which the user is located based on the foregoing spatial structure information. A boundary of the reference plane and a projection, namely, an obstacle area of the object in the space are obtained based on processed spatial structure information. The boundary of the reference plane and the obstacle area are connected on the reference plane without a boundary, to obtain a safety area in which the user can safely move, where the boundary of the safety area is the geofence.

In a possible implementation, the environmental image is obtained by photographing the scenario in which the user is located by using virtual reality VR glasses or an intelligent device with a camera. When the user enters a scenario in which a geofence is required, the user may automatically take a photo of the scenario in which the user is located based on a power-on operation of the user on a camera or camera lens, and process or detect an obtained image, for example, perform environment detection, terrain detection, environment data extraction, and image descriptor obtaining, to obtain an environmental image including the foregoing various types of information.

In a possible implementation, when the spatial structure information is pose information, a 3D point cloud, a plane, depth data, mesh identification data, and 3D object identification information, the generating the spatial structure information based on the environmental image and the IMU data, and the generating the geofence based on the spatial structure information include: obtaining the pose information and the 3D point cloud based on the environmental image and the IMU data; performing planar detection on the pose information and the 3D point cloud to obtain the plane; performing depth detection based on the environmental image to obtain depth data; processing the mesh identification data and the 3D object identification information based on the deep data; and generating the geofence based on the 3D point cloud, the plane, and themesh identification data and the3D object identification information processed based on the depth data.

The spatial structure information may be the pose information, the 3D point cloud, the information about the plane, the depth data, the mesh identification data, and the 3D object identification information. The pose information may be obtained by performing real-time pose estimation by a synchronous location and mapping (Simultaneous Localization and Mapping, SLAM) system configured by the electronic device, and is mainly used to align coordinates, so that a generated geofence is more consistent with a detected 3D real scene. The depth data may be obtained through depth estimation. After the depth data is input into the electronic device, a depth map may be obtained, and a depth value corresponding to each pixel on a planar image is obtained by aligning the depth map with the planar image in the environmental image. If the depth value is added when the environmental image and the IMU are input, accuracy of an output 3D point cloud may be effectively improved, and the output 3D point cloud may be denser. The mesh identification data is a triangular face that is generated after mesh identification and that is used to describe the object in the scenario in which the user is located. The 3D object identification information is information that is used to describe an outer surface of a 3D object after the 3D object is identified. The generating spatial structure information based on the environmental image and the IMU may be as follows: Environmental images and the IMU are input into the SLAM system, real-time feature extraction and matching are performed based on the input environmental images, to obtain a matching relationship between planar features of the images. Then, a pose of a camera is estimated based on the IMU data and a corresponding location relationship parameter between a photographing apparatus, for example, the camera and an IMU, to obtain an original pose, namely, pose information of the camera. Then, a 3D point cloud is generated based on the pose information and the matching relationship between the planar features by using an algorithm, for example, a triangulation algorithm, to obtain a 3D point cloud output by the SLAM system. Then, a plane in space is obtained through planar detection. Then, depth estimation is performed by using the environmental image as an input, to obtain depth data. The depth data may be used as an input for another data detection. For example, mesh identification and 3D object identification are performed by using the depth data as an input, to obtain mesh identification data and 3D object identification information separately. According to the foregoing method, a reference plane and a boundary of the reference plane are obtained based on the 3D point cloud. The 3D point cloud may be a denser and more accurate 3D point cloud obtained after the depth estimation. Then, according to the foregoing method, an obstacle area is obtained based on a 3D point cloud representing an obstacle, and the obstacle area is optimized based on the information about the plane, and mesh identification data and 3D object identification information processed based on the depth data, so that the obstacle area is closer to a real 3D spatial object location, plane, and boundary in the scenario in which the user is located. Then, surrounding obstacle areas are connected on the reference plane, that is, a more accurate safety activity area is obtained, and a boundary of the area is the generated geofence.

In a possible implementation, the generating the geofence includes: with a plane point of a user location in the scenario in which the user is located as a center, generating the geofence by using aligning with a coordinate system of the environmental image.

The electronic device uses a user currently using the device as a center, and connects surrounding obstacle areas on the reference plane, to obtain a safety activity area. A boundary of the obstacle area is aligned with a coordinate system of a boundary of a corresponding obstacle 3D object in the environmental image, and the generated geofence is basically consistent with a location of each 3D object in the scenario in which the user is located, so that the geofence is more suitable for the scenario in which the user is located.

In a possible implementation, after the generating the geofence, the method further includes: saving the geofence as a historical geofence.

After generating a geofence, the electronic device stores the geofence as a historical geofence, so that during next use, the user may retrieve, from a plurality of stored historical geofences, and invoke a historical geofence that is suitable for a next use scenario as the geofence. Therefore, a geofence does not need to be repeatedly generated for a same scenario each time.

In a possible implementation, after the obtaining an environmental image, the method further includes: retrieving the environmental image from the stored historical geofence, and if a historical geofence with an associated similarity is obtained, calculating a weighted score of the historical geofence, and determining a historical geofence with a highest weighted score as a target geofence; and resolving a pose of the target geofence, and if the resolving succeeds, setting the target geofence based on a difference between the pose of the target geofence and a pose of the environmental image, so that a coordinate system of the target geofence is aligned with the coordinate system of the environmental image.

In this embodiment of this application, weighted clustering is performed on corresponding candidate frames in different historical geofences based on descriptor distance sorting, to obtain the target geofence with the highest weighted score. A pose is resolved for the target geofence, and if the resolving succeeds, a coordinate conversion relationship may be calculated based on the pose that is successfully resolved and a difference between the pose of the target geofence and a pose of the environmental image, and the target geofence is loaded based on the coordinate conversion relationship. A coordinate system of the target geofence is aligned to a coordinate system of a geofence corresponding to the environmental image, namely, an electronic device that needs to be used by the user.

In a possible implementation, the depth data is time of flight TOF data.

Because depth data output by a TOF sensor is far better than a depth estimation result in precision, the depth data may preferably be TOF data obtained by the TOF sensor. For example, a depth map output by the TOF sensor is used as an input of mesh identification and 3D object detection, to obtain more accurate mesh identification data and 3D object identification information separately. According to the foregoing method, a reference plane and a boundary of the reference plane are obtained based on the 3D point cloud. The 3D point cloud may be a denser and more accurate 3D point cloud obtained after the depth estimation. Then, according to the foregoing method, an obstacle area is obtained based on a 3D point cloud representing an obstacle, and the obstacle area is optimized based on the information about the plane, and mesh identification data and 3D object identification information processed based on the depth data, so that the obstacle area is closer to a real 3D spatial object location, plane, and boundary in the scenario in which the user is located. Then, surrounding obstacle areas are connected on the reference plane, that is, a more accurate safety activity area is obtained, and a boundary of the area is the generated geofence.

In a possible implementation, the generating the geofence based on the spatial structure information includes: constructing an optimization equation based on the 3D point cloud and the information about the plane to obtain an optimized plane; optimizing the plane based on the optimization equation to obtain an optimized plane; determining a reference plane based on an optimized plane corresponding to ground; projecting, in a gravity direction, an optimized plane representing a boundary to the reference plane to determine a boundary of the reference plane, and obtaining a reference horizontal plane with a boundary corresponding to the ground; projecting, in the gravity direction, an optimized plane representing an obstacle to the reference horizontal plane to determine an obstacle area of the reference horizontal plane; and generating the geofence based on the reference horizontal plane and the obstacle area.

An optimization equation is constructed based on the 3D point cloud and the information about the plane. The plane is optimized based on the optimization equation to obtain an optimized plane, where the obtained optimized plane can not only truly represent various objects in an environment in which the user is located, but also can optimize false impact of a small planar object that does not affect use of the user in some scenarios on generation of a geofence through the information about the plane, so that the optimized plane is more accurate, and the generation of the geofence also better meets a use requirement. The generating the geofence based on the reference horizontal plane and the obstacle area may be as follows: A currently used device is used as a center, and surrounding obstacle areas on the reference horizontal plane are connected to obtain a safety activity area, where a boundary of the area is the generated geofence.

According to a second aspect, an embodiment of this application provides a method for automatically generating a geofence, including: obtaining an environmental image, where the environmental image is obtained by photographing a scenario in which a user is located; generating spatial structure information based on the environmental image, where the spatial structure information includes a 3D point cloud and 3D object identification information; identifying, based on the 3D point cloud, a reference plane corresponding to ground; determining, based on the 3D object identification information, a projection, on the reference plane, of a 3D object whose distance to the ground exceeds a first threshold, and determining a boundary of the reference plane and an obstacle area; and generating the geofence based on the reference plane, the boundary of the reference plane, and the obstacle area. A reference plane corresponding to ground is identified based on the 3D point cloud. For a method, refer to the foregoing example. Then, a 3D object whose distance to the ground exceeds a first threshold is projected to the reference plane, to determine an obstacle area. After the obstacle area is cut off from the reference plane, boundaries of the reference plane may be connected to obtain a safety area, and a boundary of the safety area is the geofence.

According to a third aspect, an embodiment of this application provides a method for automatically generating a geofence, including: obtaining an environmental image, where the environmental image is obtained by photographing a scenario in which a user is located; generating spatial structure information based on the environmental image, where the spatial structure information includes mesh identification data and 3D object identification information; identifying, based on the mesh, a reference plane corresponding to ground; determining, based on the 3D object identification information, a projection, on the reference plane, of a 3D object whose distance to the ground exceeds a first threshold, and determining a boundary of the reference plane and an obstacle area; and generating the geofence based on the reference plane, the boundary of the reference plane, and the obstacle area.

The reference plane corresponding to the ground may be first identified based on the mesh. For example, mesh identification data obtained through mesh identification is triangular faces corresponding to the ground. After the triangular faces are connected, an initial ground face area is obtained, and the area may be determined as a reference plane. Then, a mesh triangular face and a 3D object whose distances to the ground exceed a first threshold are projected to the reference plane, to determine an obstacle area. A geofence is generated based on the reference plane, a boundary of the reference plane, and the obstacle area. For example, after the obstacle area is cut off from the reference plane, boundaries of the reference plane may be connected to obtain a safety area, and a boundary of the safety area is the geofence.

In this way, a method for combining content of two kinds of spatial structure information to obtain a geofence can minimize a requirement of a solution on computing power and obtain an accurate safety activity area on the premise of ensuring a main function.

According to a fourth aspect, an embodiment of this application provides a method for detecting a geofence in real time, including: periodically collecting a real-time environmental image of a scenario in which a user is located; and if it is detected that a difference between spatial structure information corresponding to the real-time environmental image and existing spatial structure information exceeds a second threshold, updating the geofence based on the spatial structure information generated based on the real-time environmental image.

A camera may be used to periodically collect a real-time environmental image of a scenario in which a user is located, or another photographing apparatus may be used to obtain a real-time scenario in real time, periodically collect the real-time environmental image, and extract real-time spatial structure information from the image. The real-time spatial structure information is obtained based on the real-time environmental image, the existing spatial structure information is obtained based on the environmental image, and local comparison between the real-time spatial structure information and the existing spatial structure information is performed in real time. For a type of spatial structure information change, fusion between the real-time spatial structure information and the existing spatial structure information may be performed based on different fusion weight values. For example, adding of a spatial structure, a change of a size and a pose of an existing spatial structure, disappear of an original spatial structure, and the like all belong to a spatial structure information change.

In this embodiment of this application, when there is newly added spatial structure information in the real-time environmental image, to ensure safety in a use process, difference should be updated to the geofence in a timely manner. If some spatial structure information changes in the real-time environmental image, to avoid impact of a detection error on updating the geofence, different weight values should be set based on a location, a size, and an absolute value of a change of a changed structure. A larger change difference indicates a higher weight value. If some spatial structure information in the real-time environmental image is deleted, multi-frame data checking needs to be performed. After it is confirmed a plurality of times that spatial structure information disappears, and fusion is completed, global optimization is performed based on a weight value corresponding to each piece of spatial structure information, and then the geofence is updated based on spatial structure information used by the device.

In this way, the geofence is updated in real time, and a new geofence does not need to be generated. Instead, fusion is completed on an existing basis, and an added or reduced part is reflected in the geofence in real time, so that safety of the geofence can be efficiently improved.

According to a fifth aspect, an embodiment of this application provides an apparatus for automatically generating a geofence, including:

an input module configured to obtain an environmental image, where the environmental image is obtained by photographing a scenario in which a user is located; and
a processing module configured to generate spatial structure information based on the environmental image, where the spatial structure information includes a 3D point cloud and information about at least one plane, and the plane is determined by distribution of points of the 3D point cloud on the plane, where the processing module is further configured to generate the geofence based on the spatial structure information.

In a possible implementation, the at least one plane includes at least one horizontal plane and another plane, and the another plane includes a horizontal plane or a vertical plane.

In a possible implementation, the at least one plane includes at least one horizontal plane and at least one vertical plane.

In a possible implementation, the input module is further configured to obtain measurement unit IMU data, where the IMU data is obtained by performing IMU resolving on an object in the scenario in which the user is located; and the processing module is further configured to generate the spatial structure information based on the environmental image and the IMU data.

In a possible implementation, the input module is further configured to obtain the environmental image by photographing the scenario in which the user is located.

In a possible implementation, the processing module is specifically configured to: construct an optimization equation based on the 3D point cloud and the information about the plane; optimize the plane based on the optimization equation to obtain an optimized plane; determine a reference plane based on an optimized plane corresponding to ground; project, in a gravity direction, an optimized plane representing a boundary to the reference plane to determine a boundary of the reference plane, and obtain a reference horizontal plane with a boundary corresponding to the ground; project, in the gravity direction, an optimized plane representing an obstacle to the reference horizontal plane to determine an obstacle area of the reference horizontal plane; and generate the geofence based on the reference horizontal plane and the obstacle area.

In a possible implementation, the processing module further includes a pose estimation unit, a depth estimation unit, a mesh identification unit, and a 3D object identification unit, where the pose estimation unit is configured to obtain the pose information based on the environmental image and the IMU data; the 3D point cloud processing unit is further configured to obtain a the3D point cloud based on the environmental image and the IMU data; a planar detection unit is further configured to perform planar detection on the pose information and the 3D point cloud to obtain the plane; the depth estimation unit is configured to perform depth detection based on the environmental image to obtainthe depth data; the mesh identification unit is configured to process the mesh identification data based on the depth data; the 3D object identification unit is configured to process the3D object identification information based on the depth data; and thea geofence generation unit is further configured to generate the geofence based on the 3D point cloud, the plane, and the mesh identification data and the 3D object identification information processed based on the depth data.

In a possible implementation, the depth data is time of flight TOF data.

In a possible implementation, the geofence generation unit is further configured to: with a plane point of a user location in the scenario in which the user is located as a center, generate the geofence by aligning with a coordinate system of the environmental image.

In a possible implementation, the apparatus further includes:
a storage module, configured to store the geofence as a historical geofence.

In a possible implementation, the processing module further includes a historical geofence retrieval unit, where the historical geofence retrieval unit is configured to: retrieve the environmental image from the historical geofence stored in the storage module, and if a historical geofence with an associated similarity is obtained, calculate a weighted score of the historical geofence, and determine a historical geofence with a highest weighted score as a target geofence; and if the pose estimation unit successfully resolves a pose of the target geofence, the geofence generation unit sets the target geofence based on a pose difference, so that a coordinate system of the target geofence is aligned with the coordinate system of the environmental image.

According to a sixth aspect, an embodiment of this application provides an apparatus for automatically generating a geofence, including:

an input module configured to obtain an environmental image, where the environmental image is obtained by photographing a scenario in which a user is located; and
a processing module, configured to: identify, based on the 3D point cloud, a reference plane corresponding to ground; determine, based on the 3D object identification information, a projection, on the reference plane, of a 3D object whose distance to the ground exceeds a first threshold, and determine a boundary of the reference plane and an obstacle area, where the processing module is further configured to generate the geofence based on the reference plane, the boundary of the reference plane, and the obstacle area.

According to a seventh aspect, an embodiment of this application provides an apparatus for automatically generating a geofence, including:

an input module configured to obtain an environmental image, where the environmental image is obtained by photographing a scenario in which a user is located; and
a processing module configured to: determine, based on the 3D object identification information, a projection, on the reference plane, of a 3D object whose distance to the ground exceeds a first threshold, and determine a boundary of the reference plane and an obstacle area, where the processing module is further configured to generate the geofence based on the reference plane, the boundary of the reference plane, and the obstacle area.

According to an eighth aspect, an embodiment of this application provides an apparatus for detecting a geofence in real time, including:

an input module further configured to periodically collect a real-time environmental image of a scenario in which a user is located; and
a geofence updating module, configured to: if it is detected that a difference between spatial structure information corresponding to the real-time environmental image and existing spatial structure information exceeds a second threshold, update the geofence based on the spatial structure information generated based on the real-time environmental image.

The fifth aspect, the sixth aspect, the seventh aspect, and the eighth aspect and any one of the implementations thereof respectively correspond to the first aspect, the second aspect, the third aspect, and the fourth aspect and any one of the implementations thereof. For technical effects corresponding to the fifth aspect, the sixth aspect, the seventh aspect, and the eighth aspect and any one of implementations thereof, refer to technical effects corresponding to the first aspect, the second aspect, the third aspect, and the fourth aspect and any one of implementations thereof. Details are not described herein again.

According to a ninth aspect, an embodiment of this application provides an electronic device, including: one or more processors; and a memory, configured to store one or more programs, where when the one or more programs are executed by the one or more processors, the one or more processors are enabled to implement the method according to any one of implementations of the first to the fourth aspects.

According to a tenth aspect, an embodiment of this application provides a computer-readable storage medium including a computer program, where when the computer program is executed on a computer, the computer is enabled to perform the method according to any one of implementations of the first to fourth aspects.

According to an eleventh aspect, an embodiment of this application provides a computer program product, where the computer program product includes computer program code, and when the computer program code is run on a computer, the computer program code is used to perform the method according to any one of the first to the fourth aspects.

## BRIEF DESCRIPTION OF DRAWINGS

To describe the technical solutions in embodiments of this application more clearly, the following briefly introduces the accompanying drawings used in describing embodiments of this application. It is clear that the accompanying drawings in the following description show merely some embodiments of this application, and a person of ordinary skill in the art may still derive other drawings from these accompanying drawings without creative efforts.

FIG. 1 is a diagram of a structure of an electronic device that can automatically generate a geofence according to an embodiment of this application;

**EP 4 446 976 A1**

FIG. 2 is a schematic flowchart of a method for automatically generating a geofence according to an embodiment of this application;

FIG. 3 is a schematic flowchart of another method for automatically generating a geofence according to an embodiment of this application;

FIG. 4 is a schematic flowchart of a method for detecting a geofence in real time according to an embodiment of this application;

FIG. 5A to FIG. 5C are a diagram of a procedure of automatically generating a geofence;

FIG. 6 is an effect diagram of 3D object identification in a same scenario;

FIG. 7 is a diagram of spatial information fusion in automatic generation of a geofence;

FIG. 8 is a detection effect diagram of a scenario;

FIG. 9 is an original effect diagram of a geofence;

FIG. 10 is a detection effect diagram after an object is added in a scenario;

FIG. 11 is an updated effect diagram of a geofence;

FIG. 12 is a diagram of another procedure of automatically generating a geofence;

FIG. 13 is a diagram of still another procedure of automatically generating a geofence;

FIG. 14 is a diagram of yet another procedure of automatically generating a geofence;

FIG. 15 is a block diagram of a structure of an apparatus for automatically generating a geofence according to an embodiment of this application;

FIG. 16 is a block diagram of a structure of another apparatus for automatically generating a geofence according to an embodiment of this application;

FIG. 17 is a block diagram of a structure of still another apparatus for automatically generating a geofence according to an embodiment of this application;

FIG. 18 is a block diagram of a structure of yet another apparatus for automatically generating a geofence according to an embodiment of this application; and

FIG. 19 is a block diagram of a structure of an apparatus for detecting a geofence in real time according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a related concept in a specific manner.

In the descriptions of embodiments of this application, unless otherwise stated, "a plurality of" means two or more than two. For example, a plurality of processing units are two or more processing units, and a plurality of systems are two or more systems.

Because VR devices are widely used, in a conventional technology, geofences of specific shapes are preset for some VR devices, for example, a circular area with a diameter of 4 meters is defined as a geofence, or a square area with a diagonal length of 4 meters is defined as a geofence. When a geofence of a pre-designed shape is used, a user needs to search for a safe site that meets the shape requirement in advance, and then turn on the device at the center of the site to normally use the geofence. For the VR device, there is a safety area within which the user can freely move in the geofence. When detecting that a user's body exceeds or is about to exceed the geofence, prompt information is displayed on a display interface or an alarm tone is sent to inform the user that a danger may occur and the user should return to the safety area in the geofence. Presetting a geofence of a specific shape to protect user safety has a high requirement on site selection. In scenarios such as home life and work, it is not easy to find such a scenario that meets a set shape. Therefore, such a geofence has a problem that a use scenario is limited, and it is inconvenient for a user to use the geofence. Some VR devices obtain geofences by guiding users to perform operations. For example, after the VR device enables a VR eye, the VR device requires the user to adjust a height of a virtual plane displayed by the VR device in a self-centered activity site, so that the plane is attached to ground as much as possible. Then, the VR device transmits virtual rays by using a handle, and draws lines in a flat and obstacle-free area around the VR device. After line segments are connected end to end, the VR eye generates a geofence in the corresponding area. In this case, because the user needs to participate, learning costs are incurred. In a process of generating a geofence, a plane height measured by the user and a line drawn by the user directly affect accuracy of the geofence. This leads to inconvenient use and poor user experience.

Based on the foregoing problem, an embodiment of this application provides an electronic device that can automatically generate a geofence. The electronic device may be a device like VR glasses, motion sensing game equipment configured with VR, or a wheelchair configured with a geofence. The geofence can be automatically generated, so that a usage threshold of the geofence is reduced, accuracy and safety are high, and user experience can be greatly improved.

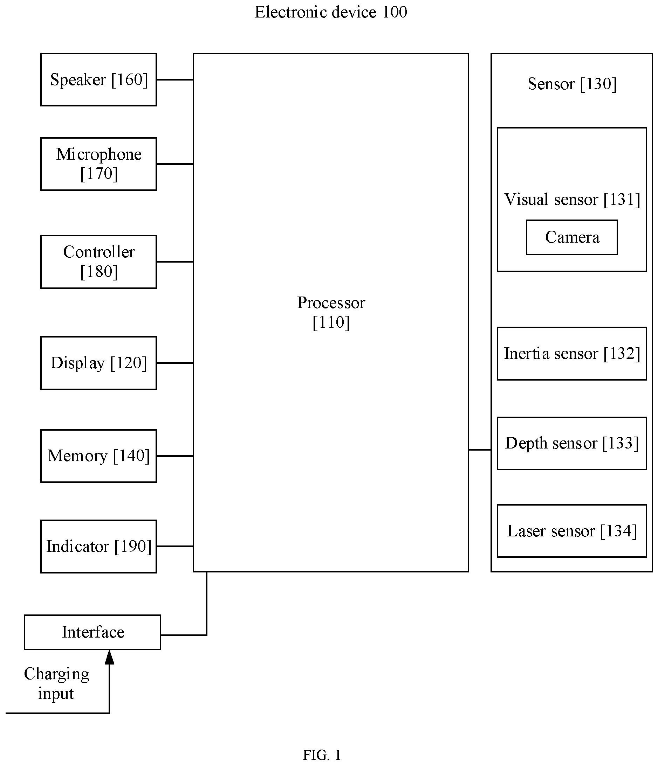

FIG. 1 is a diagram of an electronic device 100 according to an embodiment of this application. As shown in FIG. 1, the electronic device 100 includes a processor 110, a display 120, a sensor 130, a memory 140, a handle 150, a speaker 160, a microphone 170, a handle 180, and an indicator device 190.

The processor 110 may include one or more central processing units, or include one central processing unit and one graphics processing unit, or include an application processor and a coprocessor (for example, a micro control unit or a neural network processor), and may further include a buffer and a register. When the processor 110 includes a plurality of processors, the plurality of processors may be integrated into a same chip, or each of the plurality of processors may be an independent chip. One processor may include one or more physical cores, and the physical core is a minimum processing module. The processor 110 may be configured with a simultaneous localization and mapping (simultaneous localization and mapping, SLAM) system. The SLAM system can perform positioning and pose (location and posture) construction to construct an object form. The processor 110 may be configured to identify spatial structure information, perform fitting optimization, perform fusion based on weights, and the like in the following embodiments.

The display 120 is configured to display an image, a video, and the like. The display 120 includes a display panel. The display panel may be a liquid crystal display (liquid crystal display, LCD), an organic light-emitting diode (organic light-emitting diode, OLED), an active-matrix organic light emitting diode or active-matrix organic light emitting diode diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like.

The sensor 130 may sense a current state of a system, for example, an open/closed state, a location, whether the system is in contact with a user, a direction, and acceleration/deceleration. In addition, the sensor 130 may generate a sensing signal used to control an operation of the system. The sensor 130 may include a visual sensor 131 and an inertia sensor (IMU, Inertial Measurement Unit) 132, or may include a depth sensor 133 or a laser sensor 134. The visual sensor 131, for example, a camera, a camera lens, a depth camera, a lidar, or a millimeter-wave radar, may be usually configured to obtain planar image information of a scenario. The camera may be configured to capture a still image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to an ISP to convert the electrical signal into a digital image signal. The ISP outputs the digital image signal to the DSP for processing. The DSP converts the digital image signal into an image signal in a standard format like RGB or YUV. The IMU sensor 132 may include three single-axis accelerometers and three single-axis gyroscopes, and is generally configured to obtain motion information of a device, such as a linear acceleration and an angular velocity. The depth sensor 133 or the laser sensor 134 may be generally configured to obtain depth information of a scenario. The depth sensor 133 may be a time of flight (Time Of Flight, TOF) sensor, and is usually configured to obtain a depth map with higher precision.

The memory 140 may be configured to store computer-executable program code. The executable program code includes instructions. The internal memory 321 may include a program storage area and a data storage area. The program storage area may store an operating system, an application required by at least one function (for example, a voice playing function or an image playing function), and the like. The data storage area may store an electronic device, for example, data (for example, a historical geofence or a descriptor corresponding to an image) created in a process of using the VR device. In addition, the memory 140 may include a high-speed random access memory, and may further include a nonvolatile memory, for example, at least one disk storage device, a flash memory, or a universal flash storage (Universal Flash Storage, UFS). The processor 120 runs instructions stored in the memory 140 and/or instructions stored in the memory 120 disposed in the processor 130, to perform various function applications of the electronic device 100 and data processing.

The electronic device 100 may implement an audio function, for example, sound control, music playback, and recording by using the speaker 160, the microphone 170, and the like. The speaker 160, also referred to as a "loudspeaker", is configured to convert an audio electrical signal into a sound signal. The electronic device 100 may listen to a sound by using the speaker 160. For example, the VR glasses may send, to the user by using the speaker, an alarm tone indicating that the geofence is exceeded.

The microphone 170, also referred to as a "mike" or a "mic", is configured to convert a sound signal into an electrical signal. A user may make a sound near the microphone 170 through the mouth, to input a sound signal to the microphone 170. In addition to collecting a sound signal, the microphone 170 may further implement a noise reduction function. In some embodiments, a plurality of microphones 170 may be disposed in the electronic device, to implement functions such as collecting a sound signal, reducing noise, identifying a sound source, and implementing directional recording.

The handle 180 may be configured to determine a motion posture of the electronic device 100 or input a requirement signal of a user.

The indicator device 190 may be an indicator, and may be configured to indicate a charging status and a power change, or may be configured to indicate a message, blink to warn the user that the geofence is exceeded, or the like.

An interface is an interface that conforms to a standard specification, and may be specifically a mini USB interface, a micro USB interface, a USB type-C interface, or the like. The interface may be configured to connect to a charger to charge the electronic device 100, or may be configured to transmit data between the electronic device and another device, or may be configured to connect to a headset for playing audio through a headset. The interface may be alternatively configured to connect to another mobile phone, for example, an AR device.

It may be understood that the structure shown in embodiments of the present invention does not constitute a specific limitation on a control device. In some other embodiments of this application, the control device may include more or fewer components than those shown in the figure, or have some components combined, or have some components split, or have a different component arrangement. The components shown in the figure may be implemented by hardware, software, or a combination of software and hardware.

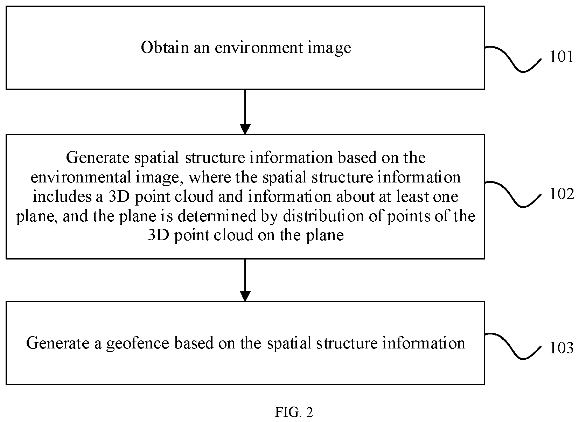

The electronic device 100 may automatically generate a geofence based on a scenario in which a user is located by using the following method, and automatically provide a geofence with high safety for the user without a user operation. FIG. 2 is a schematic flowchart of a method for automatically generating a geofence according to an embodiment of this application. As shown in FIG. 2, the method includes following step 101, step 102, and step 103.

Step 101: Obtain an environmental image.

The environmental image is obtained by photographing a scenario in which a user is located. For example, the environmental image is obtained by photographing the scenario in which the user is located by using virtual reality VR glasses or an intelligent device with a camera. For example, a visual sensor like a camera or a camera lens may be used to photograph the scenario in which the user is located to obtain an environmental image. The photographing may be automatically performed based on a power-on operation of the user. The photographing may be photographing of a plurality of photos in different directions, or may be photographing by using a method like photographing a short video and extracting a frame.

In some examples, the electronic device may further obtain IMU data. The IMU data is obtained by performing IMU resolving on an object in the scenario in which the user is located.

The IMU data may represent a posture of an object, is obtained by performing IMU resolving based on an acceleration signal that is measured by an accelerometer and that is of the object in the scenario in which the user is located on three independent axes of a coordinate system of a carrier, an angular velocity signal that is of the carrier relative to a navigation coordinate system and that is measured by a gyroscope, and a measured angular velocity and measured acceleration of the object in three-dimensional space.

In some examples, if the user previously uses an apparatus provided in this application, a geofence generated when the user previously uses the apparatus may be stored in a historical geofence. Each time the user powers on the apparatus for use, the environmental image may be compared with the historical geofence, to determine whether an adaptive historical geofence is available. For example, a VR device configured with the apparatus may invoke a historical geofence stored in the VR device for comparison, and another intelligent device that does not store a historical geofence may obtain a historical geofence from another device that stores the historical geofence for comparison through Bluetooth, cloud sharing, or another transmission manner. Alternatively, a location may be further determined based on a location of the user and a positioning function like GPS or BeiDou, and a historical geofence that has been stored when the user moves at the location is invoked for comparison.

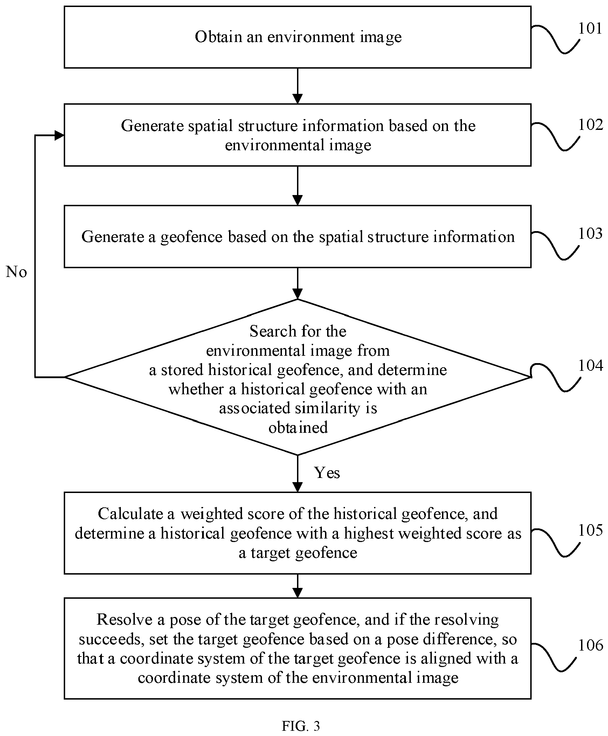

FIG. 3 is a schematic flowchart of another method for automatically generating a geofence according to an embodiment of this application. As shown in FIG. 3, the method includes step 101, step 102, step 103, step 104, step 105, and step 106.

Step 104: Retrieve the environmental image from the stored historical geofence, and determine whether a historical geofence with an associated similarity is obtained; if yes, perform step 105; otherwise, perform step 102.

In some examples, the environmental image is retrieved from the stored historical geofence. A global feature extraction may be first performed based on the input environmental image to obtain a descriptor and a current frame, and a global descriptor is obtained based on the stored historical geofence. A shorter descriptor distance indicates more similar images. Therefore, first N historical geofence images with a minimum descriptor distance are compared and selected as candidate frames, where 0<N<1000, for example, N is 100. If N candidate frames are obtained, it is determined that a historical geofence with an associated similarity is obtained.

Step 105: Calculate a weighted score of the historical geofence, and determine a historical geofence with a highest weighted score as a target geofence.

Weighted clustering is performed on corresponding candidate frames in different historical geofences based on descriptor distance sorting, to obtain the target geofence with the highest weighted score.

Step 106: Resolve a pose of the target geofence, and if the resolving succeeds, set the target geofence based on a pose difference, so that a coordinate system of the target geofence is aligned with the coordinate system of the environmental image.

A pose is resolved for the target geofence, and if the resolving succeeds, a coordinate conversion relationship may be calculated based on a difference between the pose of the target geofence and a pose of the environmental image, and the target geofence is loaded based on the coordinate conversion relationship. A coordinate system of the target geofence is aligned to a coordinate system of a geofence corresponding to the environmental image, namely, a geofence that needs to be used by the user.

In some examples, after a target geofence corresponding to a frame with a highest weighted score is obtained, consecutive candidate frames may be further calculated to obtain a more accurate coordinate conversion relationship. After pose resolving succeeds, if a successfully resolved candidate frame and the frame with the highest weighted score correspond to a same target geofence, a coordinate conversion relationship may be obtained based on an average value of the several frames. For example, an environmental image may be retrieved from a stored historical geofence, to obtain first 600 historical geofence images with a minimum descriptor distance as candidate frames, where 100 candidate frames correspond to a historical geofence A, 200 candidate frames correspond to a historical geofence B, and 300 candidate frames correspond to a historical geofence C. Weighted clustering is performed on different 600 candidate frames based on descriptor distance sorting. If a frame with a highest weighted score corresponds to the target geofence A, a pose of the target geofence A is resolved. If the resolving succeeds, poses of consecutive images may be further resolved in 100 candidate frames. If M consecutive frames are resolved successfully, 1<M<20, for example, M is 3, it may be determined whether the three candidate frames all correspond to the historical geofence A. If the three candidate frames all correspond to the historical geofence A, a coordinate conversion relationship from each candidate frame to the target geofence A may be calculated, and then a matrix average value is obtained by using the three consecutive frames to obtain a more accurate coordinate correspondence. Then, the target geofence A is loaded to the user for use based on the coordinates, so that the retrieved historical geofence A has a higher matching degree with an environment in which the user is located, and has high restoration.

A descriptor obtained by extracting a global feature and a local feature may be obtained by using a pre-trained artificial intelligence (Artificial Intelligence, AI) model, or may be obtained by using a conventional feature extraction method, for example, a fast feature point extraction and description algorithm (Oriented FAST and Rotated BRIEF) or an SIFT algorithm (Scale-Invariant Feature Transform, SIFT).

Step 102: Generate spatial structure information based on the environmental image, where the spatial structure information includes a 3D point cloud and information about at least one plane, and the plane is determined by distribution of points of the 3D point cloud on the plane.

If the electronic device in the foregoing embodiment further obtains the IMU data, the spatial structure information may be generated based on the environmental image and the IMU data in step 102.

The 3D point cloud may be output by a SLAM system, and may be used to describe a shape of a 3D object in a scenario. The plane is a plane obtained by fitting surfaces of continuously dense point cloud clusters obtained through segmentation clustering based on actual distribution of the 3D point cloud, instead of being obtained by projection of the 3D point cloud to a location.

In some examples, the at least one plane includes at least one horizontal plane and another plane, and the another plane includes a horizontal plane or a vertical plane. In other words, the plane obtained through 3D point cloud clustering should form at least one infinite plane corresponding to the ground. Otherwise, an environmental image is re-obtained, and a 3D point cloud is re-obtained to obtain a plane.

If there is still a large outer object like a wall in the scenario in which the user is located, the plane obtained based on distribution of the 3D point cloud should include at least one horizontal plane and at least one vertical plane, to represent the ground and the wall. Certainly, during an actual application, there should be a large quantity of planes obtained based on the 3D point cloud, and planes of both a horizontal plane and a vertical plane of an object in space can be obtained based on the 3D point cloud, to generate a more accurate geofence.

Further, to make the obtained geofence more accurate, the spatial structure information may further include other data, such as pose information, depth data, mesh identification data, and 3D object identification information. The pose information may be obtained by performing real-time pose estimation by a configured SLAM system, and is mainly used for aligning coordinates, so that a generated geofence has a higher degree of matching with a detected 3D real scene. The depth data may be obtained through depth estimation. After the depth data is input into the electronic device, a depth map may be obtained, and a depth value corresponding to each pixel on a planar image is obtained by aligning the depth map with the planar image in the environmental image. If the depth value is added when the environmental image and the IMU are input, accuracy of an output 3D point cloud may be effectively improved, and the output 3D point cloud may be denser. The mesh identification data is a triangular face that is generated after mesh identification and that is used to describe the object in the scenario in which the user is located. The 3D object identification information is information that is used to describe an outer surface of a 3D object after the 3D object is identified.

In some examples, the generating spatial structure information based on the environmental image may be as follows: Environmental images are input into the SLAM system, and real-time feature extraction and matching are performed based on the input images, to obtain a matching relationship between planar features of the images. Then, a pose difference is obtained by using some other detection or processing methods, such as environment detection, terrain detection, and environment data, and the spatial structure information is adjusted based on the pose difference, so that the spatial structure information is closer to the scenario in which the user is located, and a relatively real scenario can be restored.

In some examples, the generating spatial structure information based on the environmental image and the IMU data may be as follows: Environmental images and the IMU data are input into the SLAM system, and real-time feature extraction and matching are performed based on the input images, to obtain a matching relationship between planar features of the images. Then, a pose of a camera is estimated based on the IMU data and a corresponding location relationship parameter between a photographing apparatus, for example, the camera and an IMU, to obtain an original pose, namely, pose information of the camera. Then, a 3D point cloud is generated based on the pose information and the matching relationship between the planar features by using an algorithm, for example, a triangulation algorithm, to obtain the 3D point cloud. Then, based on the 3D point cloud output by the SLAM system, information about planes of the horizontal plane and the vertical plane in the space is obtained through planar detection. For example, it is detected that a horizontal plane of a table in the scenario is 60 cm*50 cm.

Then, depth estimation may be further performed based on a pre-trained AI model by using the image as an input, to obtain depth data. The depth data may be used as an input for another data detection. For example, mesh identification and 3D object identification are performed by using the depth data as an input, to obtain mesh identification data and 3D object identification information respectively. Alternatively, the mesh identification data and the 3D object identification information may be obtained through detection only based on the environmental image and the IMU data, but a detection result is not as accurate as that of adding depth data.

Step 103: Generate a geofence based on the spatial structure information.

For example, the electronic device uses a user currently using the device as a center, and connects surrounding obstacle areas on a reference plane, to obtain a safety activity area. A boundary of the obstacle area is aligned with a coordinate system of a boundary of a corresponding obstacle 3D object in the environmental image, and the generated geofence is basically consistent with a location of each 3D object in the scenario in which the user is located, so that the geofence is more suitable for the scenario in which the user is located.

The geofence may be generated in different manners based on different spatial structure information. For example, a reference plane without a boundary corresponding to the ground is first formed, and then processing such as detection and identification is performed on an object in space in which the user is located based on the foregoing spatial structure information. A boundary of the reference plane and a projection, namely, an obstacle area of the object in the space are obtained based on processed spatial structure information. The boundary of the reference plane and the obstacle area are connected on the reference plane without a boundary, to obtain a safety area in which the user can safely move. Then, a coordinate system of the boundary is aligned with a coordinate system of a corresponding object in the environmental image by using a plane point, on the reference plane, of a user location in the scenario in which the user is located as a center, where the boundary of the safety area is the geofence.

For example, when the spatial structure information includes the 3D point cloud and the information about the plane, an optimization equation is constructed based on the 3D point cloud and the information about the plane. The plane is optimized based on the optimization equation to obtain an optimized plane. A reference plane is determined based on an optimized plane corresponding to ground. In a gravity direction, an optimized plane representing a boundary is projected to the reference plane to determine a boundary of the reference plane, and a reference horizontal plane with a boundary corresponding to the ground is obtained. In the gravity direction, an optimized plane representing an obstacle is projected to the reference horizontal plane to determine an obstacle area of the reference horizontal plane. The geofence is generated based on the reference horizontal plane and the obstacle area.

For example, VR glasses may obtain the 3D point cloud output by the SLAM system. The information about the plane may be that if there is a rectangle less than 20 cm*30 cm in space, that is, a rectangle whose short sides are less than 20 cm and whose long sides are less than 30 cm, the rectangle is a plane that needs to be ignored. An optimization equation is constructed based on the 3D point cloud and the information about the plane to obtain an optimized plane, where the optimized plane no longer includes a plane of an object less than the rectangle of 20 cm*30 cm. In addition to optimizing a small plane, the optimization equation may further reduce an error value of the plane, so that the optimized plane is closer to the object in the scenario in shape.

In the optimized plane, a plane that corresponds to the opposite plane and is infinitely large should be determined as a reference plane, and then planes of objects that represent edges of the space in the optimized plane are projected to the reference plane in a gravity direction. A reference plane with a boundary, namely, a reference horizontal plane, may be obtained by connecting the planes. Other objects in the scenario have also been optimized to optimized planes that can represent the objects. In the gravity direction, the optimized planes are also projected on the reference horizontal plane to obtain obstacle areas. Then, by using the currently used device as a center and connecting surrounding obstacle areas on the reference horizontal plane, a safety activity area can be obtained, and a boundary of the area is the generated geofence.

On the premise of ensuring main functions, a more accurate safety activity area can be obtained while computing power requirements of the solution are minimized. In some examples, the spatial structure information may be the foregoing two types.

For example, when the spatial structure information is the mesh identification data and the 3D object identification information, a reference plane corresponding to ground may be first identified based on the mesh identification data. For example, mesh identification data obtained through mesh identification is triangular faces corresponding to the ground. After the triangular faces are connected, an initial ground face area is obtained, and the area may be determined as a reference plane. Then, a projection of a 3D object whose distance to the ground exceeds a first threshold on the reference plane is determined based on the 3D object identification information to determine a boundary of the reference plane and an obstacle area. For example, when the first threshold is 10 cm, a mesh triangular face and a 3D object whose distances to the ground exceed 10 cm are projected to the reference plane, to determine an obstacle area. A geofence is generated based on the reference plane, a boundary of the reference plane, and the obstacle area. For example, after the obstacle area is cut off from the reference plane, boundaries of the reference plane may be connected to obtain a safety area, and a boundary of the safety area is the geofence.

For example, when the spatial structure information is the 3D point cloud and the 3D object identification information, a reference plane corresponding to ground may be identified based on the 3D point cloud. A projection of a 3D object whose distance to the ground exceeds a first threshold on the reference plane is determined based on the 3D object identification information to determine a boundary of the reference plane and an obstacle area. A geofence is generated based on the reference plane, the boundary of the reference plane, and the obstacle area. A reference plane corresponding to ground is identified based on a 3D point cloud. For a method, refer to the foregoing example. Then, a 3D object whose distance to the ground exceeds 10 cm in space is projected to the reference plane, to determine an obstacle area. After the obstacle area is cut off from the reference plane, boundaries of the reference plane may be connected to obtain a safety area, and a boundary of the safety area is the geofence.

In some examples, when the spatial structure information includes the pose information, the 3D point cloud, the plane, the depth data, the mesh identification data, and the 3D object identification information, a geofence with highest accuracy may be obtained through fusion processing of a plurality of types of information. For example, the pose information and the 3D point cloud are obtained based on the environmental image and the IMU . A plane is obtained through planar detection based on the pose information and the 3D point cloud. The depth data is obtained through depth detection based on the environmental image. The mesh identification data and the 3D object identification information are processed based on the depth data. The geofence is generated based on the 3D point cloud, the plane, and the mesh identification data and the 3D object identification information that are processed based on the depth data.

The generating spatial structure information based on the environmental image and the IMU data may be as follows: Environmental images and the IMU data are input into the SLAM system, and real-time feature extraction and matching are performed based on the input environmental images, to obtain a matching relationship between planar features of the images. Then, a pose of a camera is estimated based on the IMU data and a corresponding location relationship parameter between a photographing apparatus, for example, the camera and an IMU, to obtain an original pose, namely, pose information of the camera. Then, a 3D point cloud is generated based on the pose information and the matching relationship between the planar features by using an algorithm, for example, a triangulation algorithm, to obtain the 3D point cloud.

Then, based on the 3D point cloud output by the SLAM system, information about a plane in space is obtained through planar detection. For example, if it is detected that a horizontal plane of a table in the scenario is 60 cm*50 cm, which is greater than a minimum identification plane of 20 cm*30 cm, the horizontal plane of the table is reserved, and the horizontal plane is projected on the reference plane to obtain an obstacle area.

Then, depth estimation is performed by using the environmental image as an input, to obtain depth data. The depth data may be used as an input for another data detection. For example, mesh identification and 3D object identification are performed by using the depth data as an input, to obtain mesh identification data and 3D object identification information separately. Because depth data output by a TOF sensor is far better than a depth estimation result in precision, if the VR device is configured with the TOF sensor, the depth data may preferably be TOF data obtained by the TOF sensor. For example, a depth map output by the TOF sensor is used as an input of mesh identification and 3D object detection, to obtain more accurate mesh identification data and 3D object identification information respectively.

According to the foregoing method, a reference plane and a boundary of the reference plane are obtained based on the 3D point cloud. The 3D point cloud may be a denser and more accurate 3D point cloud obtained after the depth estimation. Then, according to the foregoing method, an obstacle area is obtained based on a 3D point cloud representing an obstacle, and the obstacle area is optimized based on the information about the plane, and mesh identification data and 3D object identification information processed based on the depth data, so that the obstacle area is closer to a real 3D spatial object location, plane, and boundary in the scenario in which the user is located. Then, surrounding obstacle areas are connected on the reference plane, that is, a more accurate safety activity area is obtained, and a boundary of the area is the generated geofence.

In some embodiments, the depth data is TOF data. Because a size of a fitted or detected plane may be limited during mesh identification or planar detection, for example, some small planes described in the foregoing examples are ignored, some other small-area objects may be ignored during mesh identification because sizes of the small-area objects are less than a specified threshold. However, during an actual application, protruding objects such as handrails and sticks may appear in a scenario, these objects are not obtained as 3D objects in the scenario because of excessively small sizes or planes, and therefore, an obstacle area cannot be formed. When a geofence is generated, the objects are ignored, and a safety risk may be posed to the user. To avoid this case, the depth data obtained by the TOF sensor may be used to identify this type of object, and form an obstacle area, so that the foregoing problem can be effectively resolved, and safety of the detected geofence is further improved.

For example, in a SLAM system for generating a 3D point cloud, after the TOF is input, a depth value corresponding to each pixel on a 2D image may be obtained by aligning a depth map with the 2D image, and the depth value is used as an initial depth value of a triangulation module. In addition, an optimization module is constrained, so that accuracy of the 3D point cloud can be effectively improved, the output 3D point cloud is denser, and accuracy of a location, a size, and a contour of an object shown by the 3D point cloud is higher.

When the depth data is TOF data, the obtained depth data is more accurate, and an object with a small area but a large depth may be identified, and this type of object is supplemented to outer surface information of the 3D object, to obtain more accurate outer surface information of a 3D object in space in which the user is located. In some examples, accuracy of a 3D point cloud generated through TOF data processing or a result obtained by performing mesh fitting and 3D object detection after the TOF data is input is significantly improved.

Optionally, in this embodiment of this application, spatial structure information may be generated based on image information by using a trained AI model. For example, after depth estimation is performed by using the image information as an input, mesh identification is performed based on estimated depth point cloud data. Similarly, semantic recognition of a 3D object may also be performed based on an image by using a pre-trained AI model. Then, global spatial structure fusion is performed on output information about a plane, mesh information, and the like, to complete overall optimization, so that more accurate outer surface information of a 3D object in space in which the user is located is obtained.

In some examples, after the geofence is generated, the VR device may determine whether a range of the geofence meets a current use requirement of the user. If the VR device determines that the range of the geofence does not meet the requirement, the VR device may prompt the user, and guide the user to move to another area to regenerate a geofence by scanning.

In some examples, the generated geofence may be stored as a historical geofence. If the generated geofence can meet the current use requirement and the user no longer needs to be guided to move to another area, the generated geofence is stored as a historical geofence. Therefore, when the user enables the device next time, the electronic device may retrieve, from the plurality of historical geofences stored in the electronic device, a historical geofence that is suitable for a usage scenario of the electronic device, and invoke the historical geofence.

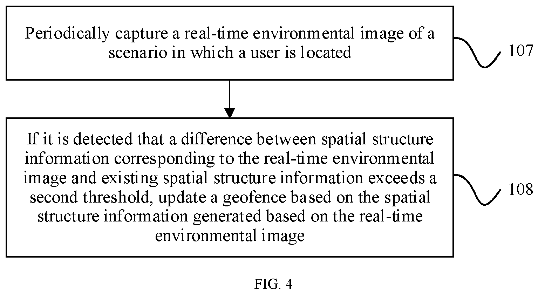

In some life scenarios, for example, when a VR glasses user is playing a game, the user is completely isolated from the real world, and the user cannot sense a change of an ambient environment during use. Once the game starts, the user cannot sense a change when a scenario in which the user is located changes, and some objects that may cause harm temporarily appear. For example, in a use process of a wheelchair of a person with visual impairment, the user cannot sense a change of an ambient environment. To help the user determine in real time whether an area in which the user is located is safe, the geofence needs to be updated in time whenever a scenario changes, so as to protect safety of the user in the use process. FIG. 4 is a schematic flowchart of a method for detecting a geofence in real time according to an embodiment of this application. As shown in FIG. 4, the method includes the following step 107 and step 108.

Step 107: Periodically collect a real-time environmental image of a scenario in which a user is located.

For example, a camera may be used to periodically collect a real-time environmental image of a scenario in which a user is located, or another photographing apparatus may be used to obtain a real-time scenario in real time, periodically collect the real-time environmental image, and extract real-time spatial structure information from the image.

Step 108: If it is detected that a difference between spatial structure information corresponding to the real-time environmental image and existing spatial structure information exceeds a second threshold, update the geofence based on the spatial structure information generated based on the real-time environmental image.

In some examples, the real-time spatial structure information may be obtained based on the real-time environmental image, existing spatial structure information is obtained based on the environmental image, and local comparison between the real-time spatial structure information and the existing spatial structure information is performed in real time. For a type of spatial structure information change, fusion between the real-time spatial structure information and the existing spatial structure information may be performed based on different fusion weight values. For example, adding of a spatial structure, a change of a size and a pose of an existing spatial structure, disappear of an original spatial structure, and the like all belong to a spatial structure information change.

For example, when new spatial structure information is added to the real-time environmental image, to ensure safety during use, the difference should be updated to the geofence in a timely manner. A weight of a plane, a point cloud, or mesh data corresponding to the newly added spatial structure information may be set to 100%, and fusion is completed based on the data.

For example, if spatial structure information in the real-time environmental image changes, to avoid impact of a detection error on updating of the geofence, different weight values should be set based on a location, a size, and an absolute value of a change of a changed structure. A larger change difference indicates a higher weight value. A weight value range may be controlled to 30% to 70%. Fusion is smoothly completed by using two to three frames of data, to complete updating of the geofence.

For example, if spatial structure information in the real-time environmental image is deleted, data of a plurality of frames needs to be checked, to confirm that the spatial structure information indeed disappears a plurality of times. For example, after it is confirmed a plurality of times that spatial structure information disappears for three consecutive frames of data, the weight value is set to 33%, and the spatial structure information is deleted by using the three frames of data, to complete fusion.

After the fusion is completed, global optimization is performed based on a weight value corresponding to each piece of spatial structure information, and then the geofence is updated based on spatial structure information used by the device, such as pose information, 3D point cloud, information about a plane, depth data, mesh identification data, and 3D object identification information.

In this way, the geofence is updated in real time, and a new geofence does not need to be generated. Instead, fusion is completed on an existing basis, and an added or reduced part is reflected in the geofence in real time, so that safety of the geofence can be efficiently improved.

The following uses an example to describe a method for using the apparatus provided in the foregoing embodiment. For example, the apparatus is configured in a VR device, is configured with a camera, and may use a SLAM system.

Step 1: First perform geofence retrieval to determine whether there is a historical geofence with an associated similarity: Extract a global feature from a photographed image, perform global retrieval based on the global feature, and if the global retrieval succeeds, project local structure information, load a corresponding geofence based on a successfully resolved pose, and align a coordinate system of the photographed image to a coordinate system of the loaded geofence.

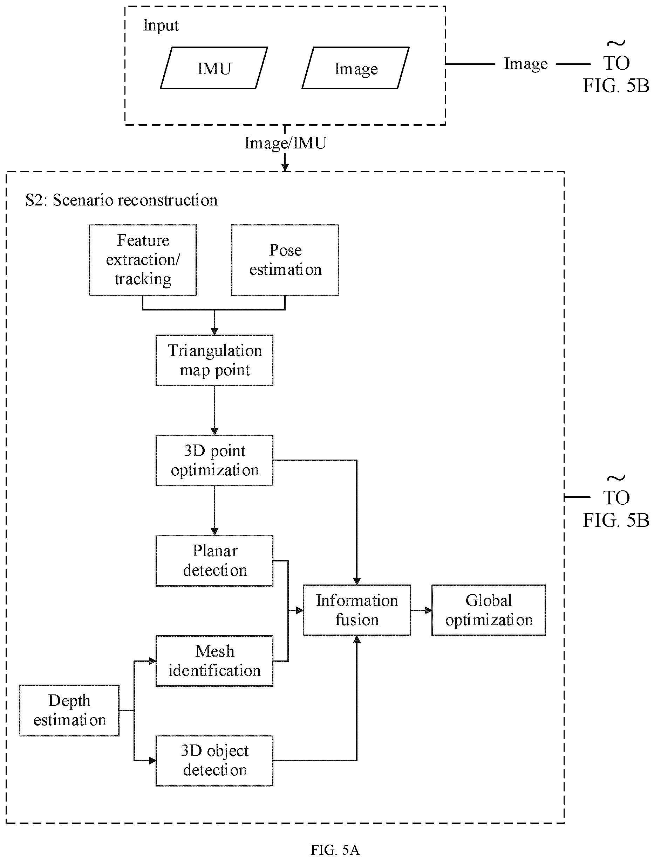

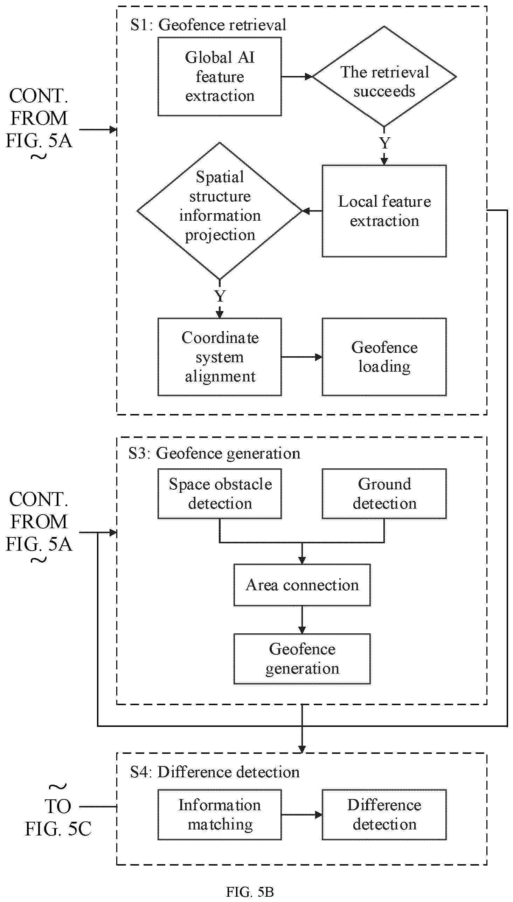

In some examples, FIG. 5A to FIG. 5C are a diagram of a procedure of automatically generating a geofence. As shown in S 1 in FIG. 5B, a VR device may first extract a global descriptor based on a current image, and compare the descriptor of the current image with descriptors corresponding to all images included in historical geofences, where a global descriptor corresponding to a stored historical geofence has been extracted and stored. Because a smaller descriptor distance indicates more similar images, 100 frames of images with a minimum descriptor distance may be selected as candidate frames. Weighted clustering is performed on corresponding candidate frames in different historical geofences based on descriptor distance sorting, to obtain a historical geofence with a highest weighted score as a target geofence.

A weighted score may be calculated as shown in formula 1-1. When a weighted score $Score_i$ corresponding to a historical geofence i is calculated, a weight $a_j$ represents whether a candidate frame that ranks j belongs to the historical geofence i. If the candidate frame that ranks j belongs to the historical geofence i, a value of $a_j$ is 1.0; if the candidate frame that ranks j does not belong to the historical geofence i, a value of $a_j$ is 0.0. A weight $b_j$ represents a weighting coefficient corresponding to a candidate frame similarity ranking, a weighting coefficient of candidate frames ranking 1 to 20 is 2.0, a weighting coefficient of candidate frames ranking 20 to 50 is 1.5, and a weighting coefficient of candidate frames ranking 50 to 100 is 1.0. Finally, a weighted score of each historical geofence i is obtained through calculation.

$$Score_i = \sum_{j=0}^{100} (a_j * b_j) \dots (1-1)$$

After the candidate historical geofence and the corresponding candidate frame are obtained, a 2D feature and a 3D point cloud that correspond to the candidate frame are aggregated, and a 2D feature corresponding to a current input image is extracted as a current frame. A 3D and 2D matching relationship between the candidate frame and the current frame may be obtained by using one or more of means such as feature matching, reprojection, and outer point removal, and then a pose $T_{wh}$ of the current frame in the target geofence is resolved by using an algorithm such as PNP. If pose resolving succeeds, it is determined that a first retrieval in the historical geofence succeeds. As shown in formula 1-2, a coordinate conversion relationship $T_{hs}$ from local coordinates $T_{ws}$ of the current frame to the target geofence may be further calculated.

Pose resolving is performed on three consecutive candidate frames based on the candidate frame by using the foregoing method, and if poses of all the three frames can be successfully resolved, a difference between a calculated coordinate conversion relationship and the coordinate conversion relationship $T_{hs}$ to the target geofence is less than 5 cm@5 degrees, and all the three frames and a frame with a highest weighted score correspond to a same target geofence, it is determined that current historical geofence retrieval succeeds. An average value of conversion relationship matrixes of the three frames is resolved as a conversion matrix, and coordinate transformation is performed on a local coordinate system in which the current frame is located, to unify the local coordinate system into a coordinate system in which a geofence required by the current user is located. In this way, coordinates of the candidate frame are aligned with coordinates of the current frame, and a historical geofence corresponding to the candidate frame is loaded as a geofence required in a current user use scenario.

$$T_{hs} = T_{wh}^{-1} * T_{ws}^{-1} \dots (1-2)$$

In some examples, both a global descriptor and a local feature may be extracted by using a pre-trained AI model, or may be directly extracted by using a conventional feature extraction method (like ORB or SIFT). This is not required herein.

If the historical geofence retrieval fails, a geofence needs to be automatically generated, as shown in S2 in FIG. 5A. The step is as follows:

Step 2: Perform scenario reconstruction: The VR device performs pose estimation and 3D point cloud generation based on the obtained environmental image and IMU, to perform plane identification, may further detect spatial structure information such as mesh and 3D object, and perform fusion and overall optimization based on the foregoing information, to obtain global spatial structure information.

In this embodiment, an example in which spatial structure information is generated based on an environmental image and IMU is used for description. An SLAM performs real-time feature extraction and matching based on input environmental images by using the SLAM, to obtain a matching relationship between planar features of images; a pose of a camera is estimated based on original IMU data and an external parameter between the camera and the IMU, to obtain an original pose of the camera; then a 3D point cloud is generated based on the pose of the camera and the matching relationship between planar features by using a triangulation algorithm; and finally, the pose of the camera and the 3D point cloud are jointly optimized. Based on information about a plane and the output 3D point cloud data, a horizontal plane and a vertical plane in space are fitted, and a size of the detected plane is limited. For example, a minimum plane that can be identified is a rectangle of 20 cm*30 cm. In this case, impact of a small plane on an output result can be avoided.

The VR device may perform depth estimation based on the pre-trained AI model and by using the environmental image as an input, and then input a depth estimation result, namely, depth data, into a pre-trained mesh identification and 3D object detection model, to perform mesh and 3D object detection, to respectively obtain mesh identification data and 3D object identification information.

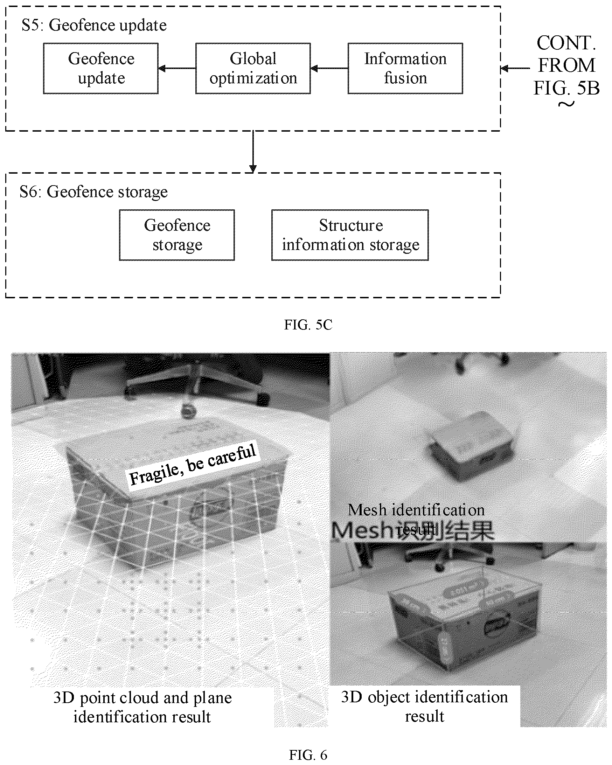

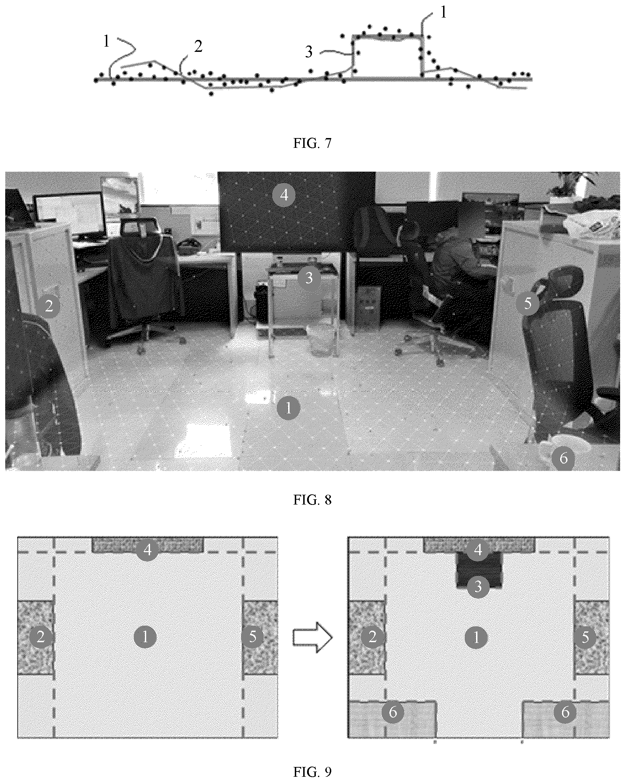

FIG. 6 is an effect diagram of 3D object identification in a same scenario. FIG. 6 shows results of 3D point cloud, plane, mesh, and 3D object identification in a same scenario. An information fusion module performs global fusion optimization by using the foregoing information as an input, and adjusts a spatial pose of an identified plane. FIG. 7 is a diagram of spatial information fusion in automatic generation of a geofence. As shown in FIG. 7, a black point represents a 3D point, 1 represents a plane, 2 represents a mesh, and 3 represents a 3D object identification result.

As shown in FIG. 6, a plane corresponding to an upper surface of a carton is used as an example. A plane equation is shown in formula 1-3. A distance $dp_i$ between a 3D point $p_i$ and the plane is shown in formula 1-4. A distance $dm_j$ from a corner point $m_j$ of each triangular face to the plane in a mesh result is also obtained by using formula 1-4. A distance between the plane and an upper plane $t_k$ of a cuboid obtained through 3D object identification is $dt_k$. Therefore, the plane and nearby i 3D points, j triangular faces, and k 3D objects form a joint error equation. An overall error e is minimized by optimizing a plane expression 1-5, so as to obtain an optimized plane with higher accuracy.

$$Ax + By + Cz + D = 0(A^2 + B^2 + C^2 = 1) \, ... \, (1-3)$$

$$dp_i = Ax_i + By_i + Cz_i + D \, ... \, (1-4)$$

$$e = \alpha \sum_{i=0}^{n} dp_i + \beta \sum_{j=0}^{n} dm_j + \gamma \sum_{k=0}^{n} dt_k \, (\alpha + \beta + \gamma = 1) \, ... \, (1-5)$$

Formula 1-3 shows the plane equation, where A, B, C, and D represent equation coefficients of the plane, and coordinates (x, y, z) of any 3D point on the plane meet the plane equation. Coordinates of the 3D point $p_i$ in three-dimensional space are ($x_i$, $y_i$, $z_i$), and a space distance from the 3D point to the plane corresponding to formula 1-3 is obtained by using formula 1-4. In the formula 1-5, $\alpha$, $\beta$, and $\gamma$ respectively represent error weight coefficients of a 3D point, a mesh triangular face, and a 3D object plane. In some embodiments, values of $\alpha$, $\beta$, and $\gamma$ may be 0.3, 0.3, and 0.4 respectively. Alternatively, weights may be adjusted based on confidence levels of the 3D point, the mesh triangular face, and the 3D object plane. When a sum of error weight coefficients is 1, a weight with a high confidence level may be correspondingly increased.

Optimized spatial structure information is obtained by using the foregoing formula, and a geofence is generated based on the optimized spatial structure information, so that the obtained geofence is more accurate.

In some examples, to reduce a requirement on computing power, the foregoing equations may be simplified, to obtain optimized information. For example, when the spatial structure information is a 3D point cloud and information about a plane, a plane equation may be first obtained by using 1-3, an error between the plane and the 3D point cloud is obtained through calculation by using 1-4, and finally, a smaller error e is obtained by optimizing a plane expression 1-6, so as to obtain an optimized plane with higher accuracy.

$$e = \sum_{i=0}^{n} dp_i \, ... \, (1-6)$$

Step 3: Generate a geofence: As shown in S3 in FIG. 5B, ground detection may be performed based on the plane output in step 2, and an obstacle above the ground is detected with reference to another spatial structure information such as mesh identification data output in step 2, to connect an outer facade of the obstacle and generate a geofence boundary.

FIG. 8 is a detection effect diagram of a scenario. As shown in FIG. 8, six planes are obtained based on 3D point cloud detection in space. For example, in the scenario shown in FIG. 8, six planes may be obtained based on 3D point cloud detection in space, and are respectively marked as "1", "2", "3", "4", "5", and "6". The planes marked with "1", "3", and "6" are horizontal planes, and the planes marked with "2", "4", and "5" are vertical planes. It may be determined, based on spatial height, that the horizontal plane "1" is a plane corresponding to the ground, namely, a reference plane. After the vertical planes "2", "4", and "5" are connected on the basis of the plane "1", a connected area shown in the left figure in FIG. 9, namely, a boundary of the reference plane, may be obtained. Based on this, the horizontal planes corresponding to "3" and "6" in space are vertically projected downward, to obtain an obstacle area. An original result of the geofence shown in the right figure in FIG. 9 is obtained by removing an intersection area between the boundary of the reference plane and the obstacle area. FIG. 9 is an original effect diagram of a geofence.

"3" and "6" in space may alternatively be identified and projected based on the mesh identification data and the 3D object identification information. In this method, fusion optimization has been performed on the "3" and "6" in step 2. Therefore, this step is mainly an example in which a geofence is identified based on a plane.

It should be noted that, after the geofence generated by using this method is provided to the VR device, the device needs to determine whether a range and a size of the geofence meet a use requirement of the user. For example, if it is determined that the geofence cannot meet a scenario requirement of an activity like a game or a motion of the user, a prompt should be provided on a program interface, and the user should be guided to another area to regenerate a geofence.

Step 4: Perform difference detection: As shown in S4 in FIG. 5B, a real-time spatial structure may be locally compared with an existing spatial structure. The real-time spatial structure may be represented by a current frame, the existing spatial structure may be represented by a historical frame, and the existing spatial structure is from the current geofence. When a detected difference exceeds a specified threshold, an update of the geofence is triggered. A main detected difference includes but is not limited to the following examples.

1. 3D point cloud difference: An ICP (Iterative Closest Point) algorithm is a commonly used point cloud matching algorithm. This method is used to calculate an overlap rate between a 3D point cloud in a field of view of the current frame and a 3D point cloud in a same area in a historical frame. The overlap rate is lower than a specified threshold. When the specified threshold is generally 80%, it may be determined that an environment changes, and an update of the geofence needs to be triggered.

2. Plane difference: When an area of a plane in a view field of the current frame exceeds a specified threshold, for example, a zoom ratio exceeds 10%, it may be determined that an environment changes, and an update of the geofence needs to be triggered. Alternatively, when a pose difference exceeds a specified threshold, for example, 10 cm@3 degrees, it may be determined that an environment changes, and an update of the geofence needs to be triggered.

3. Mesh difference: In a mesh detected in a field of view of the current frame, a specified threshold is as follows: Distances between some triangular faces and an original triangular face exceed 10 cm, and an area obtained after the triangular faces are connected exceeds 20 cm*30 cm. That is, an object whose short side exceeds 20 cm and long side exceeds 30 cm appears. When the specified threshold is exceeded, it may be determined that an environment changes, and an update of the geofence needs to be triggered.

4. 3D object difference: When a size or pose change of a 3D object detected in a field of view of the current frame exceeds a specified threshold, for example, the size change is greater than 10 cm, a zoom ratio is greater than 10%, or the pose change is greater than 10 cm@3 degrees, it is considered that a map has a change, and an update function of the geofence needs to be triggered.

Particularly, in view of safety, a determining threshold for removing an original spatial structure should be stricter than that for adding or updating a spatial structure. To avoid impact caused by false detection, an update of the geofence should be triggered after a same difference of at least two frames is continuously detected.

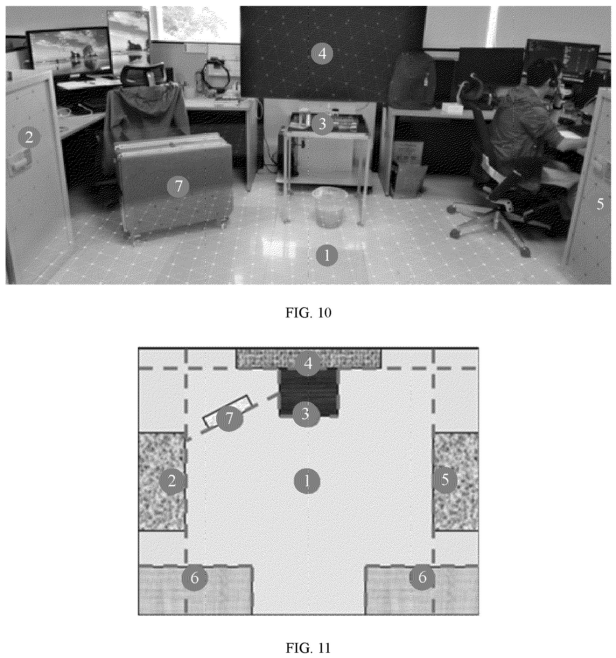

FIG. 10 is a detection effect diagram after an object is added in a scenario. As shown in FIG. 10, after an original geofence is established, a user may use a VR device in a safety area in the geofence. In a use process, the user obtains current latest spatial structure information in real time, compares the information with spatial structure information in a safety area corresponding to an existing geofence, and triggers an update of the geofence when a difference exceeds a threshold.

A scenario shown in FIG. 10 is used as an example. After the initial geofence is established, a real-time spatial structure obtained through real-time detection is different from a spatial structure corresponding to the existing geofence, that is, a vertical plane "7" is added, and the vertical plane is located in the safety area corresponding to the existing geofence. In this case, an update of the geofence should be triggered.

Step 5: Update the geofence: As shown in S5 in FIG. 5C, the real-time spatial structure is used as an input, and is fused with a difference area in the historical spatial structure. After global optimization, a geofence is regenerated. For example, it is detected in step 4 that the spatial structure corresponding to the existing geofence changes. In this case, an update function of the geofence is triggered.

A scenario shown in FIG. 10 is used as an example. After the initial geofence is established, a real-time spatial structure is different from a spatial structure corresponding to the existing geofence, that is, a vertical plane "7" is added, and the vertical plane is located in the safety area corresponding to the existing geofence. In this case, an update of the geofence should be triggered.

After fusion of the spatial structure information is completed, global optimization is performed based on a weight value corresponding to each piece of spatial structure information. For an optimization method, refer to the foregoing example. Processing in step 3 is performed on a changed object again, to complete update of the geofence. An updated geofence is shown in FIG. 11. FIG. 11 is an update effect diagram of a geofence.

Step 6: Store the geofence: As shown in S6 in FIG. 5C, before the geofence is generated the first time, the geofence is updated, or a program exits, the geofence and corresponding information thereof is stored for next use, for example, when the geofence is retrieved in step 1, the geofence may be used as a historical geofence.

During the use of this method, the geofence and corresponding information thereof is periodically stored. The information is also stored before the program exits. During startup and running of the VR device, the geofence and corresponding information thereof can be invoked as required: The information is invoked when the device is started for retrieval in step 1. The information is invoked when the device is running for difference detection in step 4.

Generally, data is compressed before a spatial structure is saved, and a quantity of stored geofences and spatial structures is limited. For example, a maximum of 10 historical geofences can be stored to reduce memory usage.

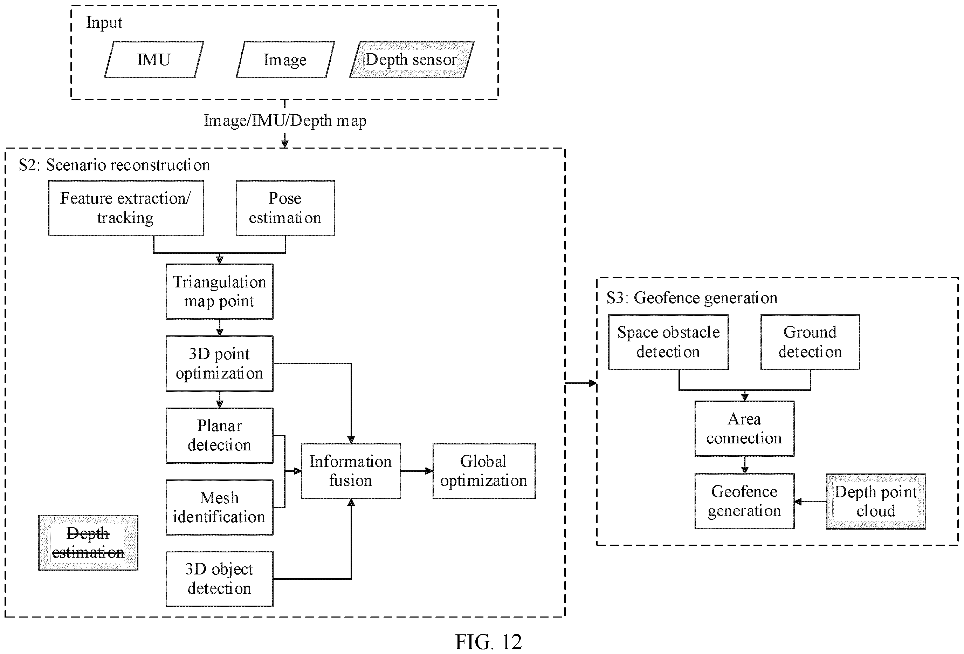

In some examples, a TOF sensor may be configured for a VR device. FIG. 12 is a schematic flowchart of another procedure of automatically generating a geofence. As shown in FIG. 12, when a 3D point cloud, mesh identification data, and 3D object identification information generated by the VR device are generated, if TOF data obtained by the TOF sensor is added, accuracy of an obtained result is significantly improved.

After depth data is input into a SLAM system for generating a 3D point cloud, a depth value corresponding to each pixel in a planar environmental image may be obtained by aligning a depth map with the planar environmental image. The depth value is used as an initial depth value of a triangulation algorithm, so that accuracy of the 3D point cloud can be effectively improved, the 3D point cloud output by the SLAM system is denser, and accuracy of a location, a size, and a contour of a described spatial object is higher. Because the depth data output by the TOF sensor is much better than a general depth estimation result in precision, a depth map output by the TOF sensor may be used as the depth data. During planar detection, mesh identification, and 3D object identification, depth data can be added to effectively avoid misidentification, thereby further improving safety of the obtained geofence.

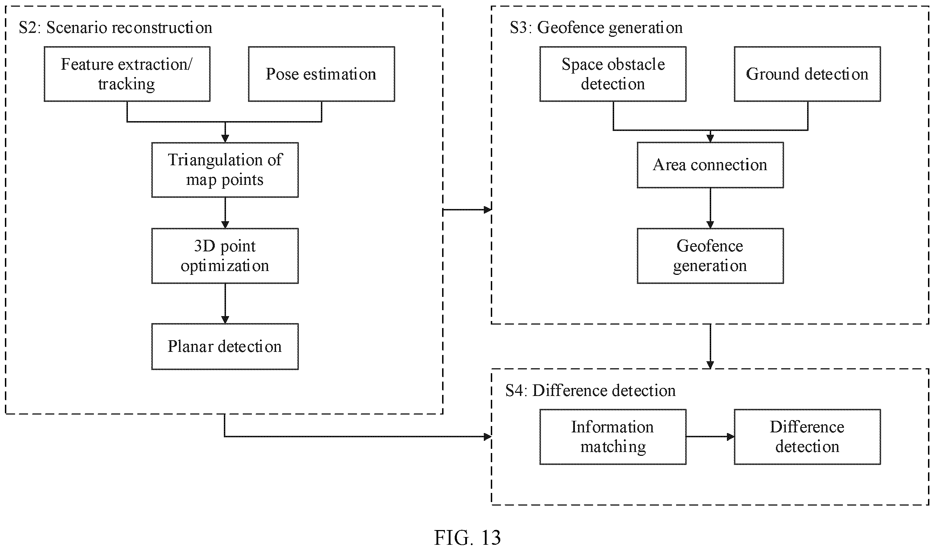

In some examples, the foregoing method for obtaining a geofence by using a plurality of pieces of spatial structure information has a high requirement on an algorithm, and the algorithm is relatively complex. As a computing power of the current VR device is limited, some simplification may be performed based on the foregoing examples, so that a requirement of the device for computing power can be minimized while a main function is ensured. FIG. 13 is a diagram of still another procedure of automatically generating a geofence. As shown in FIG. 13, in this embodiment, except that step 2 of scenario reconstruction and step 4 of difference detection are different from those in Embodiment 1, implementation methods of other steps are basically consistent with those in Embodiment 1. The differences are as follows:

Step 2: Scenario reconstruction: Only a result of a 3D point cloud on which planar detection is performed is used as a basis for generating a geofence in step 3.

Step 4: Difference detection: A real-time 3D point cloud is used as an input to register with a historical 3D point cloud, where the real-time 3D point cloud is obtained based on an environmental image obtained in real time, and the historical 3D point cloud is a 3D point cloud for generating a geofence. A difference between a 3D point cloud corresponding to the current frame and a 3D point cloud in a same area in the historical 3D point cloud is calculated. When the difference exceeds a specified value, an update of the geofence is triggered. If the ICP algorithm is used to calculate an overlap rate between the 3D point cloud of the current frame and the historical 3D point cloud, and the overlap rate is less than the specified value, usually 80%, the geofence needs to be updated.

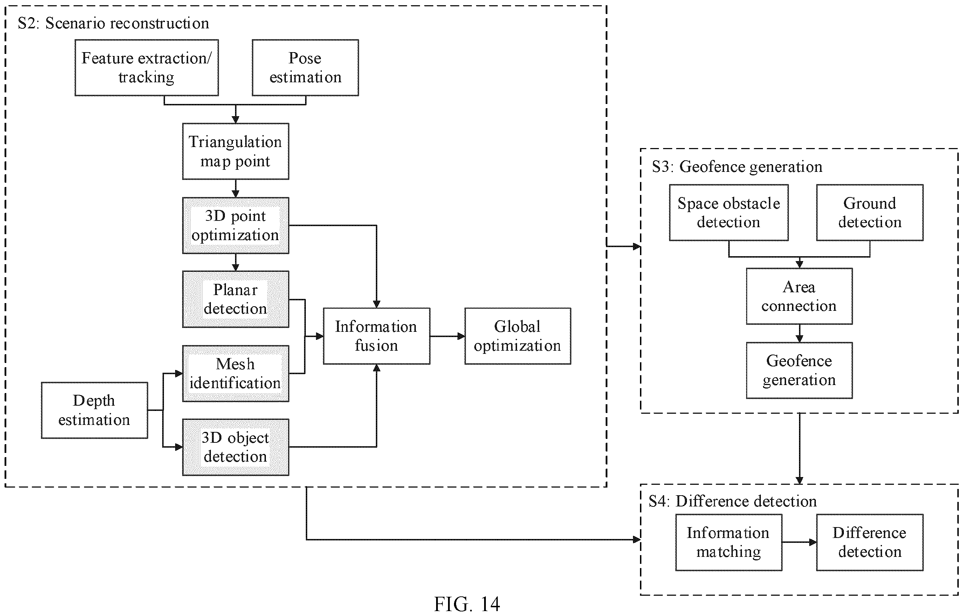

In some examples, actually, as different VR devices have different requirements for a geofence detection solution, different types of spatial structure information combinations may be used for geofence detection and generation. FIG. 14 is a diagram of yet another procedure of automatically generating a geofence. As shown in FIG. 14, how spatial structure information is combined is mainly as follows:

The spatial structure information is a 3D point cloud and 3D object identification information. A reference plane corresponding to ground may be identified based on the 3D point cloud, and then a 3D object that is in space and whose distance to the ground exceeds 10 cm is projected to a plane based on the 3D object identification information, to determine an obstacle area. After the obstacle area is cut off, a safety area is obtained. A boundary of the safety area is a geofence. During difference detection, only a 3D point cloud and 3D object identification information that are obtained in real time in the current frame needs to be compared with corresponding spatial structure information when the geofence is generated, and whether an update is required is determined based on a difference value. The comparison method is described in the foregoing embodiment.

When the spatial structure information is mesh identification data and 3D object identification information, triangular faces corresponding to the ground may be first identified based on the mesh identification data. After the triangular faces are connected, an initial ground area, namely, a reference plane, is obtained. On this basis, a triangular face and a 3D object whose distances to the ground exceed 10 cm are projected to a ground face based on the 3D object identification information, to determine an obstacle area. After the obstacle area is cut off, a safety area is obtained, that is, a geofence may be generated. During difference detection, mesh identification data and 3D object identification information in the current frame may alternatively be compared with corresponding spatial structure information when the geofence is generated, and whether an update is required is determined based on a difference value. The comparison method is described in the foregoing embodiment.

Different spatial structure information is used in a geofence generation and update method after being combined, so that customization requirements of different hardware and different device vendors for a geofence detection method can be met, and universality of the method on devices with different performance and different configurations can be further improved.

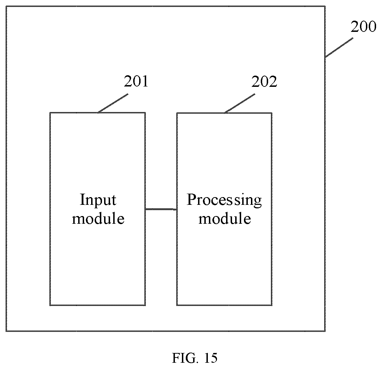

FIG. 15 is a block diagram of an apparatus for automatically generating a geofence according to an embodiment of this application. The apparatus 200 for automatically generating a geofence is shown in FIG. 15 in the foregoing example, and includes an input module 201 and a processing module 202.

The input module 201 configured to obtain an environmental image, where the environmental image is obtained by photographing a scenario in which a user is located.

For example, the input module 201 may photograph the scenario in which the user is located by using virtual reality VR glasses or a camera, to obtain an environmental image.

The processing module 202 is configured to: generate spatial structure information based on the environmental image, and generate a geofence based on the spatial structure information.

The spatial structure information includes a 3D point cloud and information about at least one plane, where the plane is determined by distribution of points of the 3D point cloud on the plane, and the processing module 202 generates the geofence according to the method for generating the geofence based on the 3D point cloud and the plane in the foregoing example.

In some examples, the at least one plane includes at least one horizontal plane and another plane, and the another plane includes a horizontal plane or a vertical plane.

Further, the at least one plane includes at least one horizontal plane and at least one vertical plane.

In some examples, the input module 201 is further configured to obtain measurement unit IMU data, where the IMU data is obtained by performing IMU resolving on an object in the scenario in which the user is located.

The processing module 202 is further configured to generate the spatial structure information based on the environmental image and the IMU data.

In some examples, the spatial structure information includes only a 3D point cloud and information about a plane.

The processing module 202 is specifically configured to: construct an optimization equation based on the 3D point cloud and the information about the plane; optimize the plane based on the optimization equation to obtain an optimized plane; determine a reference plane based on an optimized plane corresponding to ground; project, in a gravity direction, an optimized plane representing a boundary to the reference plane to determine a boundary of the reference plane, and obtain a reference horizontal plane with a boundary corresponding to the ground; project, in the gravity direction, an optimized plane representing an obstacle to the reference horizontal plane to determine an obstacle area of the reference horizontal plane; and generate the geofence based on the reference horizontal plane and the obstacle area.

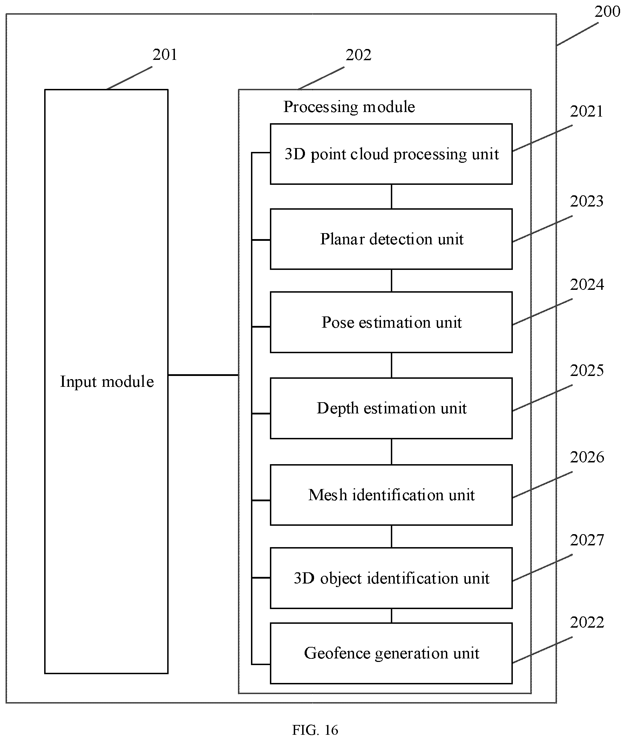

FIG. 16 is a block diagram of a structure of another apparatus for automatically generating a geofence according to an embodiment of this application. As shown in FIG. 16, the processing module 202 further includes a 3D point cloud processing unit 2021, a geofence generation unit 2022, a planar detection unit 2023, a pose estimation unit 2024, a depth estimation unit 2025, a mesh identification unit 2026, and a 3D object identification unit 2027.

The pose estimation unit 2024 is configured to obtain pose information based on an environmental image and IMU .

The 3D point cloud processing unit 2021 is further configured to obtain a 3D point cloud based on the environmental image and the IMU.

The planar detection unit 2023 is further configured to obtain a plane through planar detection based on the pose information and the 3D point cloud.

The depth estimation unit 2024 is configured to perform depth detection based on the environmental image to obtain depth data.

The mesh identification unit 2025 is configured to process mesh identification data based on the depth data.

The 3D object identification unit 2026 is configured to process 3D object identification information based on the depth data.

The geofence generation unit 2022 is further configured to generate the geofence based on the 3D point cloud, the plane, and mesh identification data and 3D object identification information processed based on the depth data.

In some examples, the apparatus 200 for automatically generating a geofence may identify, by using the 3D point cloud processing unit 2021 or the mesh identification unit 2025, a reference plane corresponding to ground, then determine, by using the 3D object identification unit 2026, based on the 3D object identification information, a projection, on the reference plane, of a 3D object whose distance to the ground exceeds a first threshold as a boundary of the reference plane, and an obstacle area, and finally, generate, by using the geofence generation unit, the geofence based on the reference plane, the boundary of the reference plane, and the obstacle area.

In some examples, the depth estimation module is a TOF sensor, and the depth data is time of flight TOF data.

In some examples, the geofence generation unit 2022 is further configured to: with a plane point of a user location in the scenario in which the user is located as a center, generate the geofence by aligning with a coordinate system of the environmental image.

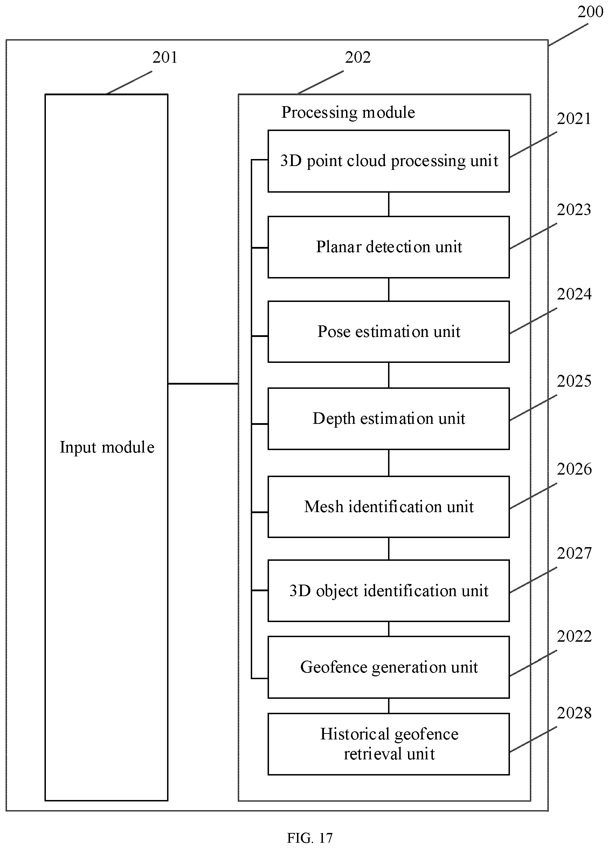

FIG. 17 is a block diagram of a structure of still another apparatus for automatically generating a geofence according to an embodiment of this application. As shown in FIG. 17, the apparatus 200 further includes a storage module 203.

The storage module 203 is configured to store the geofence as a historical geofence.

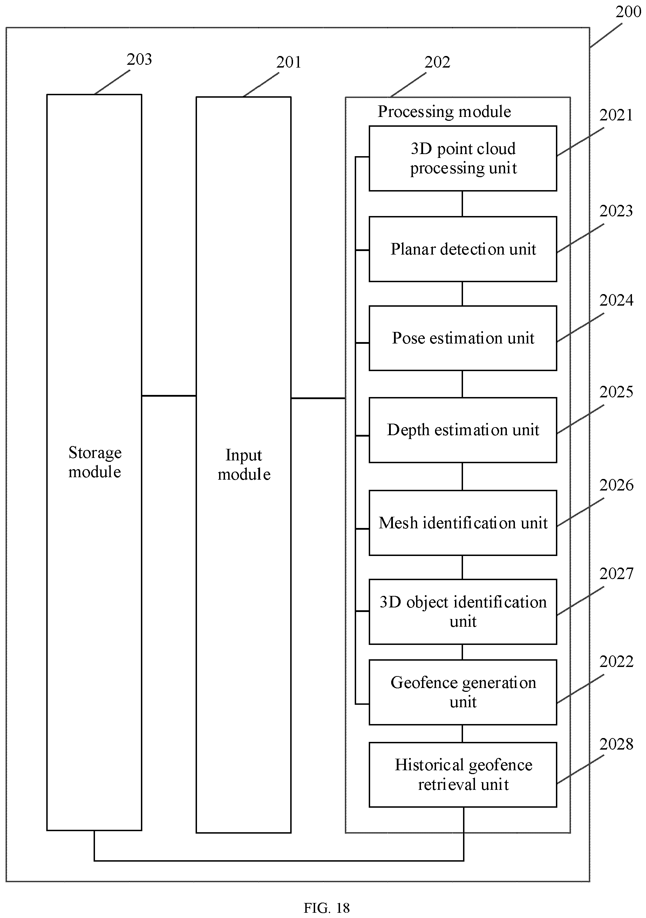

FIG. 18 is a block diagram of a structure of yet another apparatus for automatically generating a geofence according to an embodiment of this application. As shown in FIG. 18, the processing module 202 further includes a historical geofence retrieval unit 2028, configured to: retrieve an environmental image from the historical geofence stored in the storage module 203, and if a historical geofence with an associated similarity is obtained, calculate a weighted score of the historical geofence, and determine a historical geofence with a highest weighted score as a target geofence.

If the pose estimation unit 2024 successfully resolves a pose of the target geofence, the geofence generation unit 2022 sets the target geofence based on a difference between the pose of the target geofence and a pose of the environmental image, so that a coordinate system of the target geofence is aligned with the coordinate system of the environmental image.

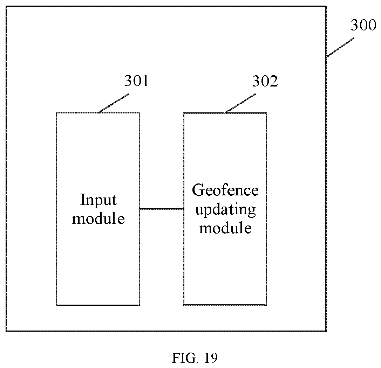

FIG. 19 is a block diagram of a structure of an apparatus for detecting a geofence in real time according to an embodiment of this application. As shown in FIG. 19, the apparatus 300 includes an input module 301 and a geofence updating module 302. The apparatus 300 may be integrated with any one of the foregoing apparatuses 200, but the modules included in the example in this embodiment are not limited.

The input module 301 is further configured to periodically collect a real-time environmental image of a scenario in which a user is located.

The geofence updating module 302 is configured to: if it is detected that a difference between spatial structure information corresponding to the real-time environmental image and existing spatial structure information exceeds a second threshold, update the geofence based on the spatial structure information generated based on the real-time environmental image.

The apparatus provided in embodiments of the present invention implements automatic detection and generation of a geofence, resolves a limitation of a geofence of a VR device on a site, and reduces learning costs of manually planning a geofence by a user, thereby significantly improving use experience of the VR device.

After the geofence is generated, in this method, a difference change of an object in space is further compared in real time, and automatic update of the geofence is completed by using a method like a difference detection method and a fusion optimization method. The geofence that is updated in real time has high timeliness, and can significantly improve safety in a use process.

A virtual apparatus provided in embodiments of the present invention may be integrated into the electronic device in the foregoing embodiment, and the geofence is generated by using the method in the foregoing embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

**Claims**

1. A method for automatically generating a geofence, comprising:

   obtaining an environmental image, wherein the environmental image is obtained by photographing a scenario in which a user is located;
   generating spatial structure information based on the environmental image, wherein the spatial structure information comprises a 3D point cloud and information about at least one plane, and the plane is determined by distribution of points of the 3D point cloud on the plane; and
   generating the geofence based on the spatial structure information.

2. The method according to claim 1, wherein the at least one plane comprises at least one horizontal plane and another plane, and the another plane comprises a horizontal plane or a vertical plane.

3. The method according to claim 1 or 2, wherein before the generating spatial structure information based on the environmental image, the method further comprises:

   obtaining measurement unit IMU data, wherein the IMU data is obtained by performing IMU resolving on an object in the scenario in which the user is located; and
   the generating spatial structure information based on the environmental image comprises:
   generating the spatial structure information based on the environmental image and the IMU data.

4. The method according to any one of claims 1 to 3, wherein the environmental image is obtained by photographing the scenario in which the user is located by using virtual reality VR glasses or an intelligent device with a camera.

5. The method according to any one of claims 1 to 4, wherein the generating the geofence based on the spatial structure information comprises:

   constructing an optimization equation based on the 3D point cloud and the information about the plane;
   optimizing the plane based on the optimization equation to obtain an optimized plane;
   determining a reference plane based on an optimized plane corresponding to ground;
   projecting, in a gravity direction, an optimized plane representing a boundary to the reference plane to determine a boundary of the reference plane, and obtaining a reference horizontal plane with a boundary corresponding to the ground;
   projecting, in the gravity direction, an optimized plane representing an obstacle to the reference horizontal plane to determine an obstacle area of the reference horizontal plane; and
   generating the geofence based on the reference horizontal plane and the obstacle area.

6. The method according to claim 3, wherein when the spatial structure information further comprises pose information, depth data, mesh identification data, and 3D object identification information, the generating the spatial structure information based on the environmental image and the IMU data, and the generating the geofence based on the spatial structure information comprise:

   obtaining the pose information and the 3D point cloud based on the environmental image and the IMU data;
   performing planar detection on the pose information and the 3D point cloud to obtain the plane;
   performing depth detection based on the environmental image to obtain the depth data;
   processing the mesh identification data and the 3D object identification information based on the deep data; and
   generating the geofence based on the 3D point cloud, the plane, and the mesh identification data and the 3D object identification information processed based on the depth data.

7. The method according to claim 6, wherein the depth data is time of flight TOF data.

8. The method according to any one of claims 1 to 7, wherein the generating the geofence comprises:
   with a plane point of a user location in the scenario in which the user is located as a center, generating the geofence by aligning with a coordinate system of the environmental image.

9. The method according to any one of claims 1 to 8, wherein after the generating the geofence, the method further comprises:
   storing the geofence as a historical geofence.

10. The method according to claim 9, wherein after the obtaining an environmental image, the method further comprises:

    retrieving the environmental image from the stored historical geofence, and if thea historical geofence with an associated similarity is obtained, calculating a weighted score of the historical geofence, and determining the historical geofence with a highest weighted score as a target geofence; and
    resolving a pose of the target geofence, and if the resolving succeeds, setting the target geofence based on a pose difference, so that a coordinate system of the target geofence is aligned with the coordinate system of the environmental image.

11. A method for automatically generating a geofence, comprising:

    obtaining an environmental image, wherein the environmental image is obtained by photographing a scenario in which a user is located;

generating spatial structure information based on the environmental image, wherein the spatial structure information comprises a 3D point cloud and 3D object identification information;

identifying, based on the 3D point cloud, a reference plane corresponding to ground;

determining, based on the 3D object identification information, a projection, on the reference plane, of a 3D object whose distance to the ground exceeds a first threshold, and determining a boundary of the reference plane and an obstacle area; and

generating the geofence based on the reference plane, the boundary of the reference plane, and the obstacle area.

12. A method for automatically generating a geofence, comprising:

obtaining an environmental image, wherein the environmental image is obtained by photographing a scenario in which a user is located;

generating spatial structure information based on the environmental image, wherein the spatial structure information comprises mesh identification data and 3D object identification information;

identifying, based on the mesh identification data, a reference plane corresponding to the ground;

determining, based on the 3D object identification information, a projection, on the reference plane, of a 3D object whose distance to the ground exceeds a first threshold, and determining a boundary of the reference plane and an obstacle area; and

generating the geofence based on the reference plane, the boundary of the reference plane, and the obstacle area.

13. A method for detecting a geofence in real time, comprising:

periodically collecting a real-time environmental image of a scenario in which a user is located; and

if it is detected that a difference between spatial structure information corresponding to the real-time environmental image and existing spatial structure information exceeds a second threshold, updating the geofence based on the spatial structure information generated based on the real-time environmental image.

14. An apparatus for automatically generating a geofence, comprising:

an input module configured to obtain an environmental image, wherein the environmental image is obtained by photographing a scenario in which a user is located; and

a processing module configured to generate spatial structure information based on the environmental image, wherein the spatial structure information comprises a 3D point cloud and information about at least one plane, and the plane is determined by distribution of points of the 3D point cloud on the plane, wherein

the processing module is further configured to generate the geofence based on the spatial structure information.

15. The apparatus according to claim 14, wherein the at least one plane comprises at least one horizontal plane and another plane, and the another plane comprises a horizontal plane or a vertical plane.

16. The apparatus according to claim 14 or 15, wherein

the input module is further configured to obtain measurement unit IMU data, wherein the IMU data is obtained by performing IMU resolving on an object in the scenario in which the user is located; and

the processing module is further configured to generate the spatial structure information based on the environmental image and the IMU data.

17. The apparatus according to any one of claims 14 to 16, wherein
the input module is further configured to obtain the environmental image by photographing the scenario in which the user is located.

18. The apparatus according to any one of claims 14 to 17, wherein
the processing module is specifically configured to: construct an optimization equation based on the 3D point cloud and the information about the plane; optimize the plane based on the optimization equation to obtain an optimized plane; determine a reference plane based on an optimized plane corresponding to ground; project, in a gravity direction, an optimized plane representing a boundary to the reference plane to determine a boundary of the reference plane, and obtain a reference horizontal plane with a boundary corresponding to the ground; project, in the gravity direction, an optimized plane representing an obstacle to the reference horizontal plane to determine an obstacle area of the reference horizontal plane; and generate the geofence based on the reference horizontal plane and the obstacle area.

19. The apparatus according to claim 16, wherein the processing module comprises a pose estimation unit, a 3D point cloud processing unit, a planar detection unit, a depth estimation unit, a mesh identification unit, and a 3D object identification unit, wherein

the pose estimation unit is configured to obtain thepose information based on the environmental image and the IMU data;
the 3D point cloud processing unit is further configured to obtain the 3D point cloud based on the environmental image and the IMU data;
the planar detection unit is further configured to perform planar detection on the pose information and the 3D point cloud to obtain the plane.
the depth estimation unit is configured to perform depth detection based on the environmental image to obtain the depth data;
the mesh identification unit is configured to process the mesh identification data based on the depth data;
the 3D object identification unit is configured to process the3D object identification information based on the depth data; and
thea geofence generation unit is further configured to generate the geofence based on the 3D point cloud, the plane, and themesh identification data and the3D object identification information processed based on the depth data.

20. The apparatus according to claim 19, wherein the depth data is time of flight TOF data.

21. The apparatus according to any one of claims 14 to 20, wherein
the geofence generation unit is further configured to: with a plane point of a user location in the scenario in which the user is located as a center, generate the geofence by aligning with a coordinate system of the environmental image.

22. The apparatus according to any one of claims 14 to 21, wherein the apparatus further comprises:
a storage module, configured to store the geofence as a historical geofence.

23. The apparatus according to claim 22, wherein the processing module further comprises a historical geofence retrieval unit, wherein

the historical geofence retrieval unit is configured to: retrieve the environmental image from the historical geofence stored in the storage module, and if a historical geofence with an associated similarity is obtained, calculate a weighted score of the historical geofence, and determine a historical geofence with a highest weighted score as a target geofence; and
if the pose estimation unit successfully resolves a pose of the target geofence, the geofence generation unit sets the target geofence based on a pose difference, so that a coordinate system of the target geofence is aligned with the coordinate system of the environmental image.

24. An apparatus for automatically generating a geofence, comprising:

an input module configured to obtain an environmental image, wherein the environmental image is obtained by photographing a scenario in which a user is located; and
a processing module, configured to: identify, based on the 3D point cloud, a reference plane corresponding to ground; determine, based on the 3D object identification information, a projection, on the reference plane, of a 3D object whose distance to the ground exceeds a first threshold, and determine a boundary of the reference plane and an obstacle area, wherein
the processing module is further configured to generate the geofence based on the reference plane, the boundary of the reference plane, and the obstacle area.

25. An apparatus for automatically generating a geofence, comprising:

an input module configured to obtain an environmental image, wherein the environmental image is obtained by photographing a scenario in which a user is located; and

a processing module configured to: determine, based on the 3D object identification information, a projection, on the reference plane, of a 3D object whose distance to the ground exceeds a first threshold, and determine a boundary of the reference plane and an obstacle area, wherein

the processing module is further configured to generate the geofence based on the reference plane, the boundary of the reference plane, and the obstacle area.

26. An apparatus for detecting a geofence in real time, comprising:

an input module further configured to periodically collect a real-time environmental image of a scenario in which a user is located; and

a geofence updating module, configured to: if it is detected that a difference between spatial structure information corresponding to the real-time environmental image and existing spatial structure information exceeds a second threshold, update the geofence based on the spatial structure information generated based on the real-time environmental image.

27. An electronic device, comprising:

one or more processors; and

a memory, configured to store one or more programs, wherein

when the one or more programs are executed by the one or more processors, the one or more processors are enabled to perform the method according to any one of claims 1 to 13.

28. A computer-readable storage medium, comprising a computer program, wherein when the computer program is executed on a computer, the computer is enabled to perform the method according to any one of claims 1 to 13.

29. A computer program product, wherein the computer program product comprises computer program code, and when the computer program code is run on a computer, the computer is enabled to perform the method according to any one of claims 1 to 13.

Electronic device 100

FIG. 1

Obtain an environment image 101

Generate spatial structure information based on the environmental image, where the spatial structure information includes a 3D point cloud and information about at least one plane, and the plane is determined by distribution of points of the 3D point cloud on the plane 102

Generate a geofence based on the spatial structure information 103

FIG. 2

Obtain an environment image ⌇ 101

Generate spatial structure information based on the environmental image ⌇ 102

Generate a geofence based on the spatial structure information ⌇ 103

No

Search for the environmental image from a stored historical geofence, and determine whether a historical geofence with an associated similarity is obtained ⌇ 104

Yes

Calculate a weighted score of the historical geofence, and determine a historical geofence with a highest weighted score as a target geofence ⌇ 105

Resolve a pose of the target geofence, and if the resolving succeeds, set the target geofence based on a pose difference, so that a coordinate system of the target geofence is aligned with a coordinate system of the environmental image ⌇ 106

FIG. 3

Periodically capture a real-time environmental image of a
scenario in which a user is located    107

If it is detected that a difference between spatial structure
information corresponding to the real-time environmental
image and existing spatial structure information exceeds a
second threshold, update a geofence based on the spatial
structure information generated based on the real-time
environmental image    108

FIG. 4

FIG. 5A

S1: Geofence retrieval

Global AI feature extraction → The retrieval succeeds

Y

Spatial structure information projection ← Local feature extraction

Y

Coordinate system alignment → Geofence loading

CONT. FROM FIG. 5A
~

S3: Geofence generation

Space obstacle detection    Ground detection

Area connection

Geofence generation

CONT. FROM FIG. 5A
~

S4: Difference detection

Information matching → Difference detection

~
TO FIG. 5C

FIG. 5B

S5: Geofence update

| Geofence update | ← | Global optimization | ← | Information fusion |

CONT. FROM FIG. 5B
~

S6: Geofence storage

| Geofence storage | | Structure information storage |

FIG. 5C

3D point cloud and plane identification result

Mesh identification result
Mesh识别结果

3D object identification result

FIG. 6

FIG. 7

FIG. 8

FIG. 9

FIG. 10

FIG. 11

**Input**

IMU Image Depth sensor

Image/IMU/Depth map

**S2: Scenario reconstruction**

Feature extraction/ tracking

Pose estimation

Triangulation map point

3D point optimization

Planar detection

Mesh identification

~~Depth estimation~~

3D object detection

Information fusion

Global optimization

**S3: Geofence generation**

Space obstacle detection

Ground detection

Area connection

Geofence generation

Depth point cloud

FIG. 12

S3: Geofence generation

Space obstacle detection

Ground detection

Area connection

Geofence generation

S2: Scenario reconstruction

Feature extraction/ tracking

Pose estimation

Triangulation of map points

3D point optimization

Planar detection

S4: Difference detection

Information matching

Difference detection

FIG. 13

FIG. 14

FIG. 15

200

201                    202

Processing module

2021

3D point cloud processing unit

2023

Planar detection unit

2024

Pose estimation unit

2025

Depth estimation unit

Input module

2026

Mesh identification unit

2027

3D object identification unit

2022

Geofence generation unit

FIG. 16

FIG. 17

200

203   201   202

Processing module

2021

3D point cloud
processing unit

2023

Planar detection unit

2024

Pose estimation unit

2025

Depth estimation unit

2026

Mesh identification unit

2027

3D object identification
unit

2022

Geofence generation
unit

2028

Historical geofence
retrieval unit

Storage
module

Input
module

FIG. 18

300

301          302

Input
module

Geofence
updating
module

FIG. 19

## INTERNATIONAL SEARCH REPORT

| | International application No. |
|---|---|
| | **PCT/CN2022/141783** |

### A. CLASSIFICATION OF SUBJECT MATTER

G06T7/00(2017.01)i

According to International Patent Classification (IPC) or to both national classification and IPC

### B. FIELDS SEARCHED

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, BAIDU: 电子围栏, 虚拟围栏, 地理围栏, 地理边界, 电子栅栏, 点云, IMU, 位姿, 平面, 投影, 障碍物, mesh, 深度, TOF, geo-fencing, point cloud, IMU, plane, projection, obstacle, depth

### C. DOCUMENTS CONSIDERED TO BE RELEVANT

| Category* | Citation of document, with indication, where appropriate, of the relevant passages | Relevant to claim No. |
|---|---|---|
| X | CN 109326001 A (CHINA ENFI ENGINEERING CORP.) 12 February 2019 (2019-02-12) paragraphs 42 and 58 | 1-4, 8-9, 13-17, 21-22, 26-29 |
| Y | CN 109326001 A (CHINA ENFI ENGINEERING CORP.) 12 February 2019 (2019-02-12) paragraphs 42 and 58 | 6-7, 19-20 |
| Y | CN 113436136 A (APPLE INC.) 24 September 2021 (2021-09-24) paragraphs 16 and 56 | 6-7, 19-20 |
| A | WO 2020215172 A1 (SZ DJI TECHNOLOGY CO., LTD.) 29 October 2020 (2020-10-29) entire document | 1-29 |
| A | US 10313638 B1 (AMAZON TECHNOLOGIES, INC.) 04 June 2019 (2019-06-04) entire document | 1-29 |
| A | 强明辉, 等 (QIANG, Minghui et al.). "基于UAV地面站避让系统的地理围栏算法设计与仿真 (Design and Simulation of Geo-fencing Algorithm Based on UAV Ground Station Avoidance System)" *Automation & Instrumentation,* Vol. 33, No. 7, 31 December 2018 (2018-12-31), pages 10-14 | 1-29 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 February 2023** | **28 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/141783** |

| C. | DOCUMENTS CONSIDERED TO BE RELEVANT | |
| --- | --- | --- |
| Category* | Citation of document, with indication, where appropriate, of the relevant passages | Relevant to claim No. |
| A | S. R. Gasrzon, et al. "Infrastructure-Assisted Geofencing: Proactive Location-Based Services with Thin Mobile Clients and Smart Servers" *2015 3rd IEEE International Conference on Mobile Cloud Computing, Services, and Engineering*, 25 June 2015 (2015-06-25), entire document | 1-29 |

Form PCT/ISA/210 (second sheet) (July 2022)

**INTERNATIONAL SEARCH REPORT**
Information on patent family members

International application No.

**PCT/CN2022/141783**

| Patent document cited in search report | | | Publication date (day/month/year) | Patent family member(s) | | | Publication date (day/month/year) |
|---|---|---|---|---|---|---|---|
| CN | 109326001 | A | 12 February 2019 | None | | | |
| CN | 113436136 | A | 24 September 2021 | US | 2021279967 | A1 | 09 September 2021 |
| WO | 2020215172 | A1 | 29 October 2020 | CN | 110799989 | A | 14 February 2020 |
| US | 10313638 | B1 | 04 June 2019 | US | 10757376 | B1 | 25 August 2020 |
| | | | | US | 11146758 | B1 | 12 October 2021 |

Form PCT/ISA/210 (patent family annex) (July 2022)

**REFERENCES CITED IN THE DESCRIPTION**

**Patent documents cited in the description**

- CN 202111679498